Europäisches Patentamt
European Patent Office
Office européen des brevets

(11) Veröffentlichungsnummer **0 013 879**
**B1**

(12) # EUROPÄISCHE PATENTSCHRIFT

(45) Veröffentlichungstag der Patentschrift
15.09.82

(51) Int. Cl.³: **C 09 B 62/085,** D 06 P 3/10, D 06 P 3/66

(21) Anmeldenummer 80100024.1

(22) Anmeldetag: 04.01.80

(54) **Reaktivfarbstoffe sowie deren Herstellung und Verwendung zum Färben von OH- und Amidgruppen enthaltenden Materialien.**

(30) Priorität 16.01.79 DE 2901547

(43) Veröffentlichungstag der Anmeldung
**06.08.80 Patentblatt 80/16**

(45) Bekanntmachung des Hinweises auf die Patenterteilung:
**15.09.82 Patentblatt 82/37**

(84) Benannte Vertragsstaaten
**CH DE FR GB IT**

(56) Entgegenhaltungen
**FR-A-2 173 255**

**Die Akte enthält technische Angaben, die nach dem Eingang der Anmeldung eingereicht wurden und die nicht in dieser Patentschrift enthalten sind.**

(73) Patentinhaber **BAYER AG, Zentralbereich Patente, Marken und Lizenzen, D-5090 Leverkusen 1, Bayerwerk (DE)**

(72) Erfinder: **Henk, Hermann, Dr., Roggendorfstrasse 55, D-5000 Koeln 80 (DE)**
Erfinder: **Krämer, Erich, Dr., Am Katterbach 11, D-5060 Bergisch-Gladbach (DE)**
Erfinder: **Schündehütte, Karl Heinz Dr., Klief 75, D-5090 Leverkusen 3 (DE)**
Erfinder: **Nickel, Horst, Dr., Fontanestrasse 23, D-5090 Leverkusen 1 (DE)**

**EP 0 013 879 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Reaktivfarbstoffe sowie deren Herstellung und Verwendung zum Färben von OH- und Amidgruppen enthaltenden Materialien

Gegenstand der vorliegenden Erfindung sind gegebenenfalls metallhaltige Reaktivfarbstoffe, die in Form der freien Säure der allgemeinen Formel (I)

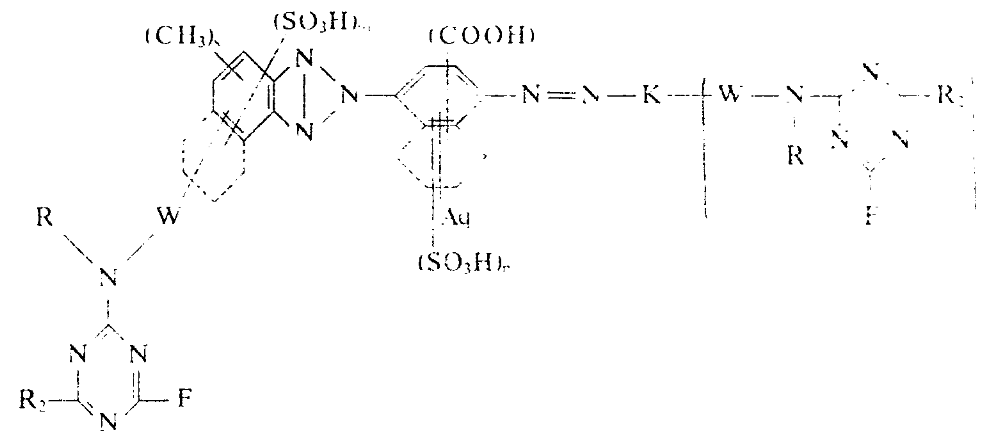
(I)

entsprechen, worin

K = Rest einer Kupplungskomponente, bevorzugt einer Kupplungskomponente der Benzol-, Naphthalin-, Pyrazolon-, Pyridon-, Pyrimidon-, Indol-, Aminopyrazol-, Aminopyridin-, Aminopyrimidin- oder Acetessigarylid-Reihe,
A = nichtionogener Substituent,
W = direkte Bindungen oder ein Brückenglied zu einem C-Atom des Benzol- oder Naphthalinkerns bzw. einem C-Atom eines aromatisch-carbocyclischen oder aromatisch-heterocyclischen Rings der Kupplungskomponente K,
$R_1$ = Wasserstoff oder Substituent, insbesondere $C_1-C_4$-Alkyl,
$R_2$ = Substituent
m = 0, 1 oder 2,
n = 0, 1 oder 2,
p = 0 oder 1,
q = 0, 1 oder 2,
r = 0 oder 1,
s = 0 oder 1,

sowie Verfahren zu deren Herstellung und deren Verwendung zum Färben und Bedrucken von OH- und NH-gruppenhaltigen Fasermaterialien wie Cellulose, Wolle und synthetischen Polyamiden.

Geeignete Substituenten

$R_2$ sind beispielsweise Aminogruppen

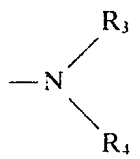 oder Gruppen $-OR_5$ oder $-SR_5$

(IIa) (IIb) (IIc)

worin

$R_3$ und $R_4$ unabhängig voneinander Wasserstoff, niedermolekulares Alkyl, Aryl, Aralkyl oder Cycloalkyl bedeuten oder zusammen, gegebenenfalls unter Einschluß eines oder mehrerer Heteroatome einen Ring bilden, insbesondere einen 5- oder 6gliedrigen, und
$R_5$ für niedermolekulares Alkyl, Aryl oder Aralkyl steht.

Das Alkyl, Aralkyl und Cycloalkyl kann übliche Substituenten aufweisen.

Aryl steht bevorzugt für gegebenenfalls substituiertes Phenyl oder Naphthyl.

W steht bevorzugt für eine direkte Bindung zu einem C-Atom eines aromatisch-carbocyclischen oder aromatisch-heterocyclischen Ringes. Geeignete Brückenglieder W sind beispielsweise $-CO-$, $-SO_2-$,

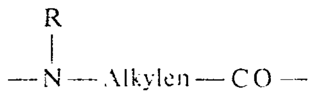
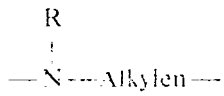
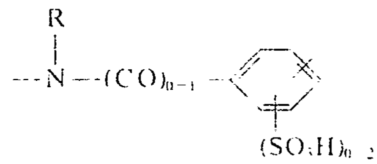

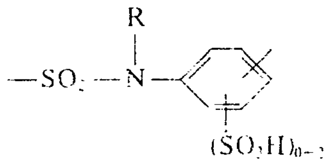
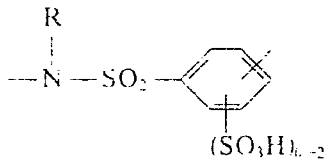

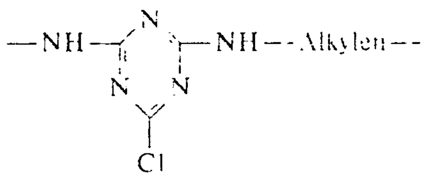
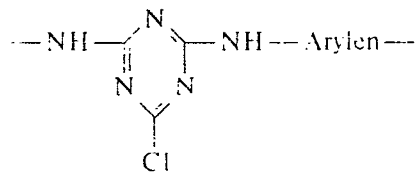

$-Arylen-(O)_{0-1}-Alkylen$
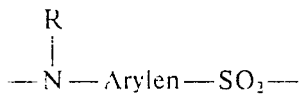
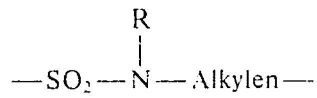

wobei

| | |
|---|---|
| R | bevorzugt = H oder $C_1$–$C_4$-Alkyl |
| Alkylen | bevorzugt $C_2$–$C_5$-Alkylen und |
| Arylen | bevorzugt gegebenenfalls substituiertes Phenyl bedeutet. |

Bevorzugte Farbstoffe sind solche der Formel (III)

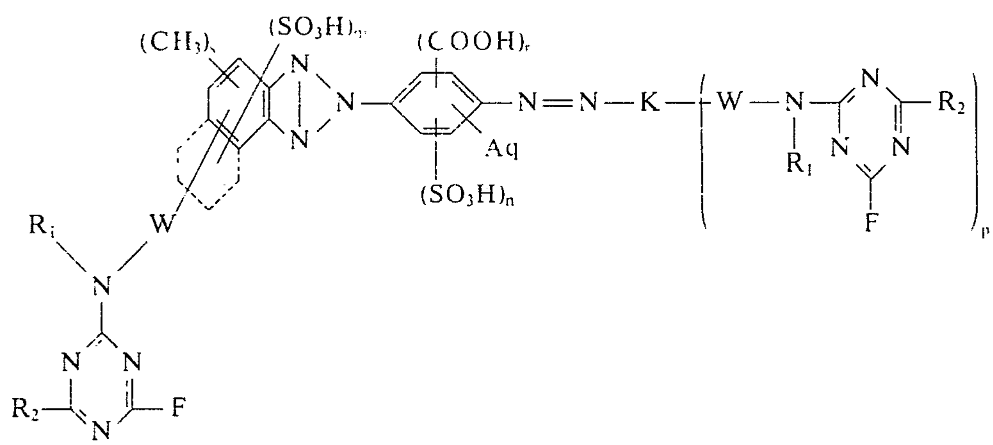
(III)

in der m, n, r, p, q, s, A, K, $R_1$, $R_2$ und W die in Formel (I) angegebene Bedeutung besitzen, weiterhin solche der Formel (IV)

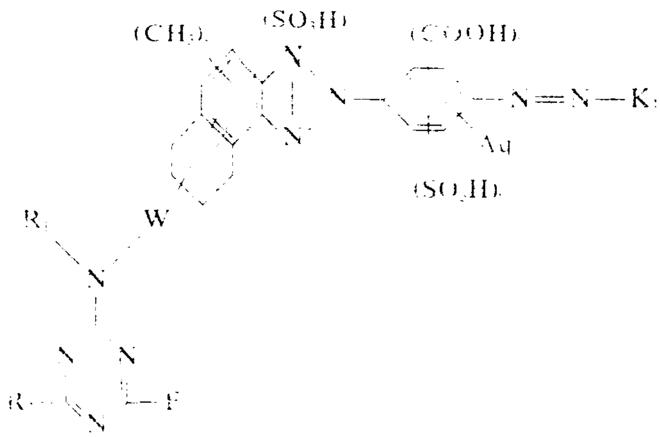

(IV)

in der m, n, r, q, s, A, $R_1$, $R_2$ und W die in Formel I angegebene Bedeutung haben und $K_1$ eine Kupplungskomponente der Benzol-, Naphthalin-, Pyrazolon-, Pyridon, Pyrimidon-, Indol-, Aminopyrazol-, Aminopyrimidin-, Aminopyridin- oder Acetessigarylid-Reihe darstellt, die keinen Monofluortriazinrest enthält,

weiterhin solche der Formel (V)

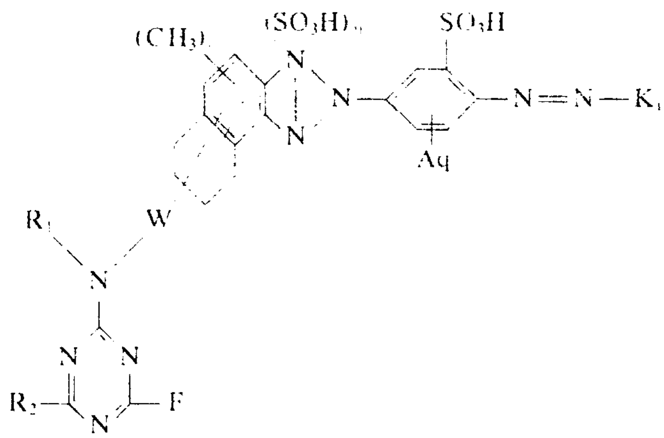

(V)

in welcher m, q, s, A, W, $R_1$, $R_2$ und $K_1$ die in Formel (IV) angegebene Bedeutung besitzen, weiterhin solche der Formeln (VI) und (VIa)

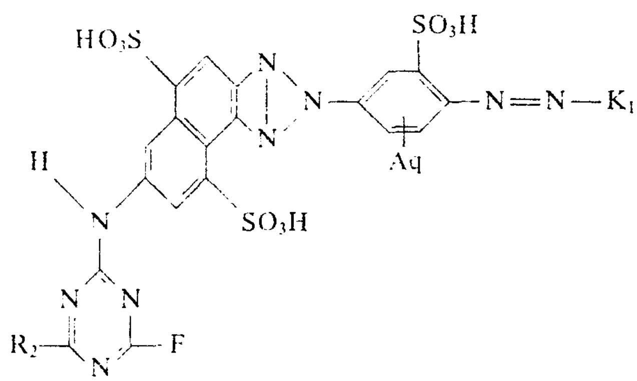

(VI)

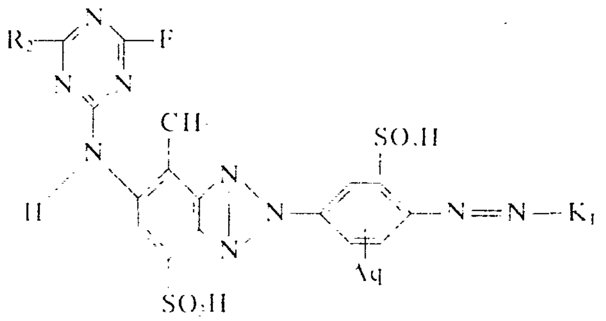

(VIa)

in welchen q, A, $R_2$ und $K_1$ die in Formeln (IV) angegebene Bedeutung besitzen,

insbesondere Farbstoffe der Formeln (III) bis (VIa), in denen K bzw. $K_1$ den Rest einer Kupplungskomponente der Pyrazolon-, Pyridon-, Pyrimidon-, Indol-, Aminopyrazol-, Aminopyridin-, Aminopyrimidin- oder Acetessigarylid-Reihe bedeuten und insbesondere Farbstoffe der Formeln (III) bis (Va), in denen K bzw. $K_1$ ein Rest der Formel (VII)

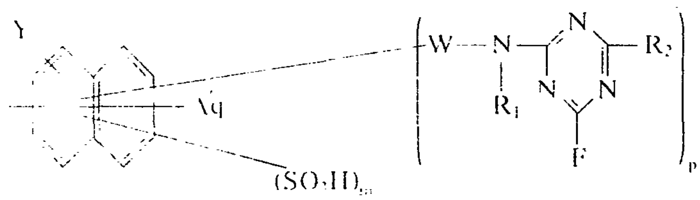

(VII)

bedeutet,

in welcher p, q, m, $R_1$, $R_2$ und W die oben angegebene Bedeutung besitzen,

Y eine Hydroxy- oder Aminogruppe und

A' einen nichtionischen Substituenten darstellt, insbesondere Farbstoffe der Formeln (IV) bis (VIa), in denen $K_1$ einen Rest der Formel (VIII)

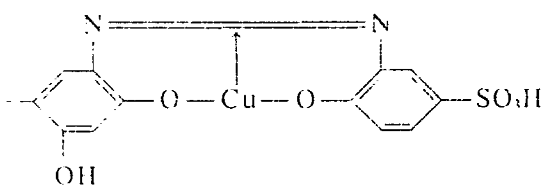

(VIII)

darstellt,

weiterhin solche der Formel (IX)

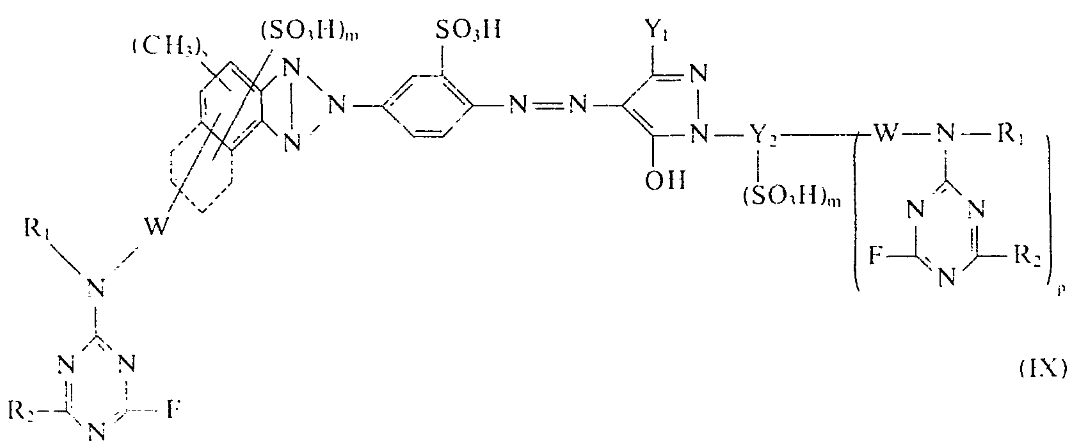

(IX)

in welcher m, p, s, $R_1$, $R_2$ und W die obengenannte Bedeutung besitzen.

$Y_1$ für $C_1-C_4$-Alkyl, Caboxy oder Carbalkoxy mit 1–4 C-Atomen in der Alkoxygruppe steht, und

$Y_2$ einen gegebenenfalls nichtionogenen weitersubstituierten aromatisch-carbocyclischen Rest, insbesondere einen solchen der Benzol- oder Naphthalin-Reihe bedeutet,

weiterhin solche der Formel (X)

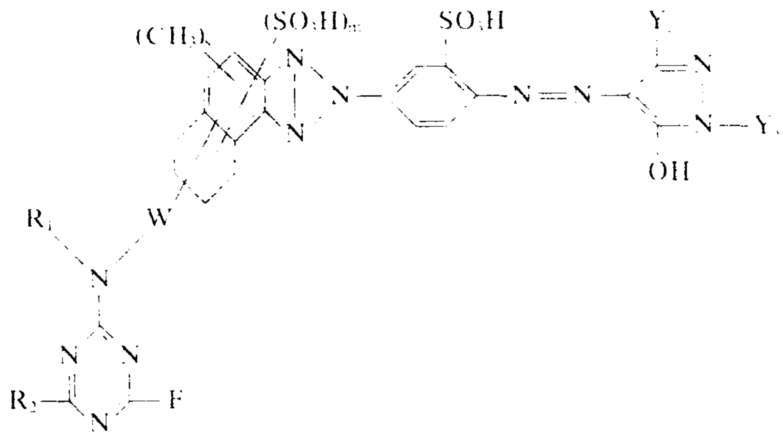

(X)

in welcher m, s, $R_1$, $R_2$, W und $Y_1$ die oben angegebene Bedeutung besitzen, und

$Y_3$ Wasserstoff oder einen $C_1-C_4$-Alkylrest darstellt, der gegebenenfalls durch Hydroxy, Halogen, Cyan, Carboxy, Carbalkoxy substituiert sein kann,

weiterhin solche der Formel (XI)

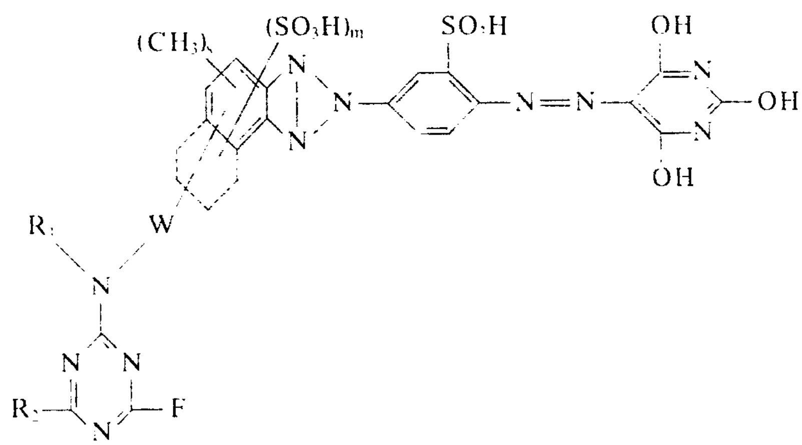

(XI)

in welcher m, s, $R_1$, $R_2$ und W die obengenannte Bedeutung haben,

weiterhin solche der Formel (XII)

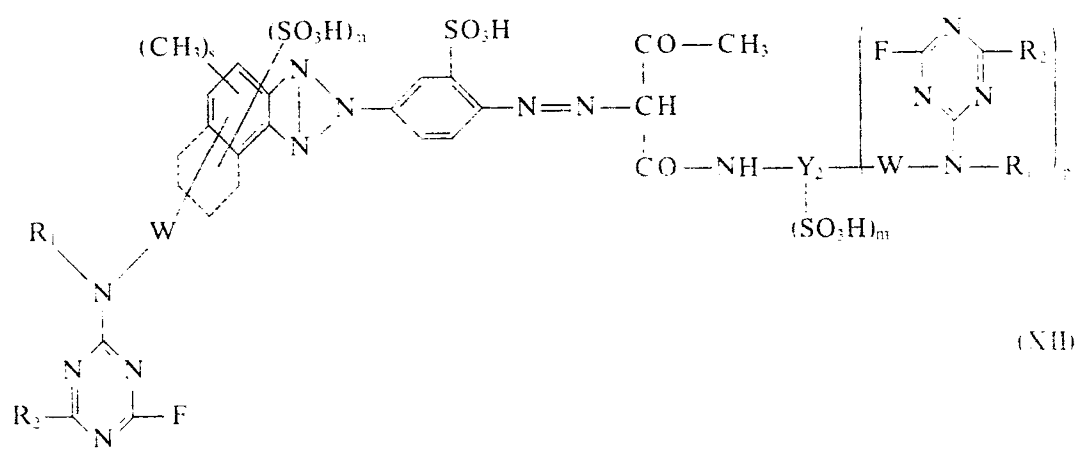

(XII)

in welcher m, s, p, $R_1$, $R_2$, W und $Y_4$ die oben angegebene Bedeutung besitzen, weiterhin solche der Formel (XIII)

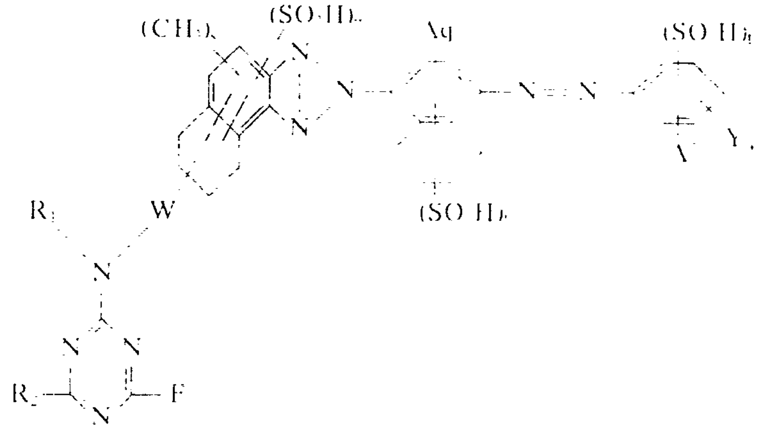

(XIII)

in welcher m, s, n, q, A, $R_1$, $R_2$ und W die oben angegebene Bedeutung besitzen,

t = 0 oder 1 ist,

A'' = für einen nichtionogenen Substituenten steht, und

$Y_4$ = eine gegebenenfalls alkylierte Hydroxygruppe, eine gegebenenfalls durch Alkyl- oder Acylreste substituierte Aminogruppe darstellt oder für den Rest

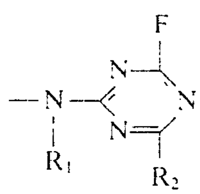

worin $R_1$ und $R_2$ die oben angegebene Bedeutung haben.

Geeignete nichtionogene Reste A sind zum Beispiel Halogen-Atome wie F, Cl, Br, Cyangruppen, Alkylreste mit 1—4 C-Atomen wie $-CH_3$, $-C_2H_5$, n- und i-$C_3H_7$, n-, i- und t-$C_4H_9$ und Alkoxyreste mit 1—3 C-Atomen, wie Alkoxy, Äthoxy, n- und i-Propoxy, Acylaminoreste, beispielsweise Formylamino $C_1-C_4$-Alkylcarbonylamino wie Acetyl- oder Propionylamino, OH.

Geeignete nichtionogene Reste A' sind beispielsweise Alkoxyreste mit 1—3 C-Atomen wie Methoxy, Äthoxy, n- und i-Propoxy, Acylaminoreste wie z. B. Forylamino, $C_1-C_4$-Alkylcarbonylamino wie Acetyl und Propionylamino, Arylcarbonylaminogruppen, insbesondere Phenylcarbonyl-, Tolylcarbonyl- oder Anisylcarbonylamino, $C_1-C_4$-Alkylsulfonylaminogruppen wie Methyl, Äthyl und Propylsulfonylamino, Arylsulfonylaminogruppen wie Phenyl- und Tolylsulfonylamino, Carboxy, ggf. durch $C_1-C_4$-Alkylreste wie $-CH_3$, $-C_2H_5$, n-, i-$C_3H_7$ oder durch Arylreste wie Phenyl, Chlorphenyl, Tolyl oder Anisyl mono- oder di-substituierte Carbonamid- und Sulfonamidgruppen, $C_1-C_4$-Alkylaminoreste, wie z. B. $-NH-CH_3$, $-N(CH_3)_2$, $-NH-C_2H_5$, $-NH-C_3H_7$, $-N(C_4H_3)_2$, Arylaminoreste, insbesondere ggf. durch Chlor, Brom, Methyl und Methoxy substituierte Phenylaminoreste.

Als nichtionogene Substituenten A'' kommen insbesondere in Betracht:Halogenatome wie Cl und F, Alkyl- und Alkoxyreste mit 1—4 C-Atomen, Cycloalkylreste, vorzugsweise der Cyclohexylrest sowie ggf. durch Halogen substituierte Arylreste wie Phenyl und Chlorphenyl.

Die Reste A—A'' können jeweils gleich oder verschieden sein. Geeignete Reste $Y_1$ sind beispielsweise $-CH_3$, $-C_2H_5$, $-COOH$, $-COOCH_3$ und $-COOC_2H_5$.

$Y_2$ ist vorzugsweise ein beispielsweise durch $C_1-C_4$-Alkyl wie $-CH_3$, $-C_2H_5$, n- und i-$C_3H_7$, Halogen wie Cl, Br oder durch $C_1-C_4$-Alkoxy wie $-OCH_3$, $-OC_2H_5-$, $-OC_3H_7$ substituierter Phenylrest.

Geeignete Reste $Y_3$ sind beispielsweise Wasserstoff, Alkylreste mit 1—4 C-Atomen wie $-CH_3$, $-C_2H_5$, n-, i-$C_3H_7$, n-, i- und t-$C_4H_9$, durch Hydroxy-, Cyan-, Carboxy-, Carbalkoxygruppen substituierte Alkylreste mit 1—4 C-Atomen wie z. B. 2-Hydroxyäthyl, 2-Hydroxypropyl, Carboxymethyl, Carbäthoxymethyl, 2-Chlor-, 2-Brom-, 2-Cyanäthyl und -propyl.

Geeignete Alkylreste für die Hydroxygruppe oder Aminogruppe $Y_4$ sind gegebenenfalls durch Halogen, insbesondere Chlor oder Brom, Hydroxy, Alkoxy insbesondere $C_1-C_4$-Alkoxy und Cyanreste substituierte Alkylreste mit 1—7 C-Atomen.

Geeignete Acylreste sind beispielsweise Alkylcarbonylreste, insbesondere $C_1-C_7$-Alkylcarbonyl und Arylcarbonyl, insbesondere gegebenenfalls substituiertes Phenylcarbonyl.

Die Farbstoffe der allgemeinen Formel (I) werden erhalten, indem man Verbindungen der Formel

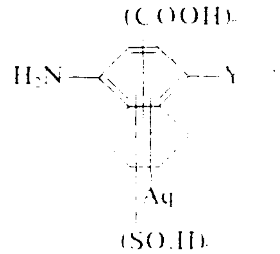

(XIV)

in welcher n, r, q und A die obengenannte Bedeutung besitzen und $Y_5$ eine Nitro- oder Acylaminogruppe bedeutet,

diazotiert und mit einer Verbindung der Formel

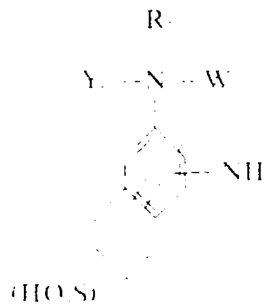

oder

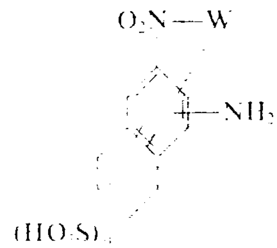

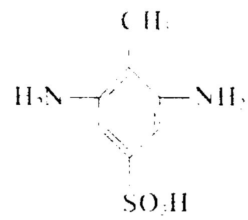

(XV) (XVa) (XVb)

in welcher m, W und $R_1$ die obengenannte Bedeutung besitzen und $Y_6$ Wasserstoff oder eine Acylgruppe bedeutet,

in o-Stellung zur Aminogruppe kuppelt und anschließend triazoliert. Nach der gegebenenfalls erforderlichen Reduktion der Nitrogruppe bzw. Verseifung der Acylaminogruppe setzt man mit 2,4,6-Trifluor-1,3,5-triazin

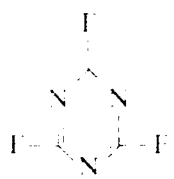

(XVI)

und einer Verbindung $R_2$—H (XVIa) in beliebiger Reihenfolge um, worin $R_2$ die obengenannte Bedeutung hat.

Die so erhaltene Aminoverbindung der Formel (XVII)

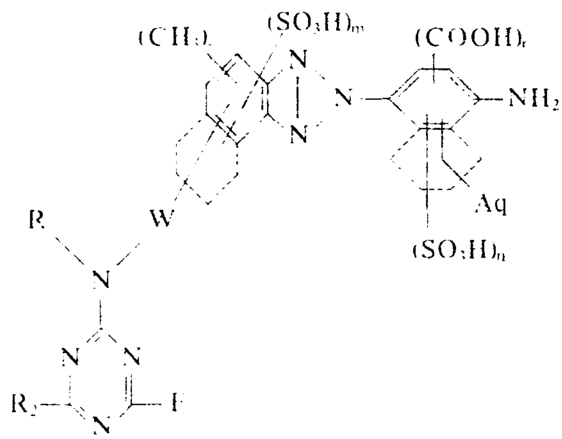

(XVII)

wird diazotiert und mit einer Kupplungskomponente

$H-K_1$ 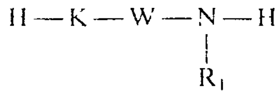 oder 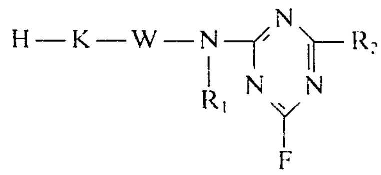

(XVIII) (XIX)

wobei $K_1$, K, W, $R_1$ und $R_2$ die obengenannte Bedeutung haben, umgesetzt.

Die Farbstoffe mit einem Rest der Formel (XVIII) werden anschließend mit der Reaktivkomponente der Formel (XVI) und einer Verbindung $R_2-H$ in beliebiger Reihenfolge zur Reaktion gebracht.

Selbstverständlich sind die Reaktivfarbstoffe auch zu erhalten, indem man Farbstoffe der Formel (XX)

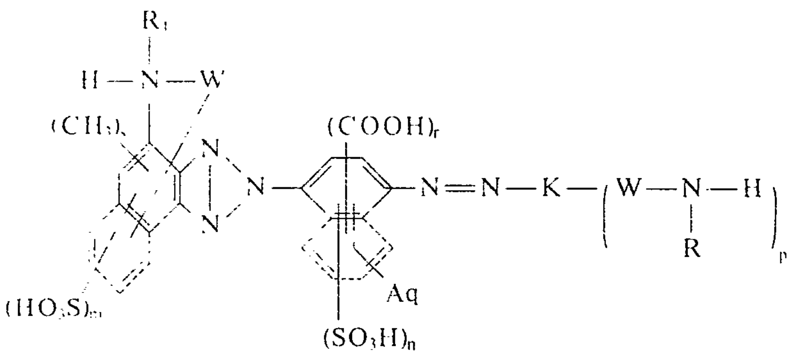

(XX)

in welcher m, n, p, q, r, s, A, W und $R_1$ die obengenannte Bedeutung besitzen,

mit 1 oder 2 Mol der Reaktivkomponente der Formel (XVI) und $R_2-H$ (XVIa) umsetzt. Produkte der Formel (XX) werden beispielsweise erhalten, wenn man eine Verbindung der Formel (XIV), in der $Y_5$ eine Nitrogruppe darstellt, diazotiert, mit einer Verbindung der Formel (XV), in der $Y_6$ eine Acylgruppe darstellt, kuppelt und triazotiert. Nach der Reduktion der Nitrogruppe wird erneut diazotiert mit einer Komponente

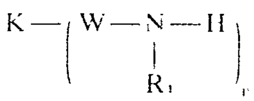

(XXI)

in welcher K, W, $R_1$ und p die obengenannte Bedeutung besitzen,

gekuppelt und anschließend die Acylgruppe $Y_6$ hydrolytisch abgespalten.

Farbstoffe der allgemeinen Formel (IV) werden auch erhalten, indem man Verbindungen der Formel (XIV) diazotiert und mit Kupplungskomponenten $H-K_1$ kuppelt und anschließend die Nitrogruppe reduziert bzw. die Acylaminogruppe verseift. Nach Diazotierung der so erhaltenen Aminoazoverbindung der Formel

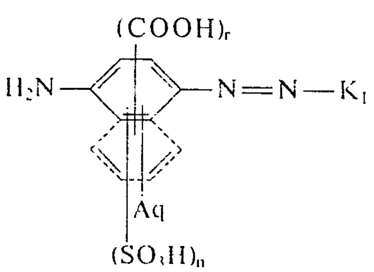

(XXII)

in welcher n, r, q, A und $K_1$ die oben angegebene Bedeutung besitzen,

kuppelt man mit Verbindungen der Formel (XV) oder (XVa) und triazoliert. Nach der ggf. erforderlichen Reduktion der Nitrogruppe bzw. Verseifung der Acylaminogruppe behandelt man die erhaltenen Farbstoffe mit der Reaktivkomponente der Formel (XVI) und der Verbindung $R_2-H$ (XVIa) in beliebiger Reihenfolge.

Farbstoffe der Formel (XIII), in denen $Y_4$ eine Alkoxygruppe bedeutet, werden dadurch erhalten, daß man Verbindungen der Formel (XIV), in denen $Y_5$ eine Nitrogruppe darstellt, diazotiert, mit Verbindungen der Formel (XV), in denen $Y_6$ eine Acylgruppe bedeutet, kuppelt und triazoliert. Nach Reduktion der Nitrogruppe wird weiter diazotiert, mit Phenol bzw. einem Phenolderivat gekuppelt und auf übliche Weise die Hydroxygruppe alkyliert. Anschließend wird die Acylgruppe $Y_6$ hydrolytisch abgespalten und der Farbstoff mit der Reaktivkomponente der Formel (XVI) und der Verbindung $R_2-H$ (XVIa) in beliebiger Reihenfolge umgesetzt.

Farbstoffe der Formel (XIII) mit $Y_4$=Alkoxy werden ebenfalls erhalten, wenn man Aminoazoverbindungen der Formel

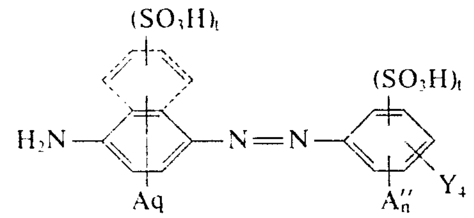

(XXIII)

in der q, t, n, A und A″ die oben angegebene Bedeutung besitzen und
$Y_4$ eine gegebenenfalls durch Halogen-, Hydroxy-, Alkoxy- oder Cyanreste substituierte Alkoxygruppe bedeutet,

diazotiert, mit Verbindungen der Formel (XV) oder (XVa) kuppelt und triazotiert. Die Umsetzung des Farbstoffes mit der Reaktivkomponente erfolgt anschließend, gegebenenfalls nach Abspaltung der Acylgruppe bzw. Reduktion der Nitrogruppe. Aminoazoverbindungen der Formel (XXIII) werden auf übliche Weise durch Diazotieren und Kuppeln erhalten unter Verwendung von Verbindungen der Formel

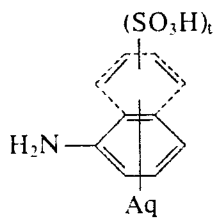

(XXIV)

und

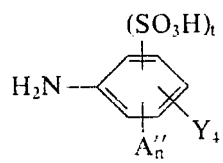

(XXV)

in welchen q, t, n, A, A″ und $Y_4$ die in Formel (XXIII) angegebene Bedeutung besitzen.

Gegebenenfalls setzt man die N-Methansulfonsäure des Anilins der Formel (XXIV) ein und hydrolysiert die Schutzgruppe nach erfolgter Kupplung.

Als Ausgangsmaterialien zur Herstellung der neuen Farbstoffe seien beispielsweise folgende Verbindungen genannt:

a) Aminoverbindungen der Formel (XIV)

4-Nitro-anilin, 2-Chlor-, 3-Chlor-4-nitro-anilin, 2,5-Dichlor-,
2,6-Dichlor-4-nitro-anilin, 4-Nitro-2-methyl-anilin,
5-Chlor-4-nitro-2-methyl-anilin, 2-Cyan-4-nitro-anilin,
4-Amino-acetanilid, 4-Aminooxanilsäure, 2,5-Dichlor-4-amino-acetanilid,
2-Amino-5-acetylamino-toluol, 4-Nitro-anilin-sulfonsäure-(2) und -(3),
5-Amino-2-oxalylamino-benzolsulfonsäure, 2-Amino-5-formylamino-benzolsulfonsäure,
2-Amino-5-acetylamino-benzolsulfonsäure, 5-Nitro-2-amino-benzolcarbonsäure,
2-Amino-5-acetylamino-benzolcarbonsäure-(1) und -(2),
4-Nitro-naphthylamin-(1)-sulfonsäure-(5),
4-Nitro-naphthylamin-(1)-sulfonsäure-(6),
1-Amino-4-acetylamino-naphthalin-sulfonsäure-(6) und -(7),

b) Aminoverbindungen der Formel (XV) und (XVa)

1,3-Diamino-benzol, 4-Chlor-1,3-diamino-benzol, 2,4-Diaminotoluol, 2,6-Diamino-toluol, 1,4-Diamino-naphthalin, 2,7-Diamino-naphthalin, 2,4-Diamino-benzolsulfonsäure, 1,5-Diamino-naphthalin-disulfonsäure-(3,7), 1,6-Diamino-naphthalin-disulfonsäure-(4,8), 1,4-Diamino-naphthalin-sulfonsäure-(6), 1-Amino-4-acetamino-naphthalin-sulfonsäure-(6), 1-Amino-4-acetamino-naphthalin-sulfonsäure-(7), 1-Amino-6-(4-nitrobenzoylamino)-naphthalin-disulfonsäure-(4,8), 1-Amino-4-(3-nitrobenzoylamino)-naphthalin-sulfonsäure-(7), 1-Amino-4-(4-nitrobenzoylamino)-naphthalin-sulfonsäure-(6).

c) Kupplungskomponenten K—H

3-Methyl-pyrazolon-(5), 1-Phenyl-3-methyl-pyrazolon-(5), 1-(2-Chlorphenyl)-3-methyl-pyrazolon-(5), 1-(2,5-Dichlorphenyl)-3-methyl-pyrazolon-(5), 1-Phenyl-3-methyl-pyrazolon-(5)-carbonsäure-(3) und äthylester, 1-Phenyl-3-methyl-pyrazolon-(5)-imid, 1-(2-Chlor-phenyl)-3-methylpyrazolon-(5)-imid, 1,o-Tolyl-3-methyl-pyrazolon-(5)-imid, 1-(2-,3-,4-Sulfo-phenyl)-3-methyl-pyrazolon-(5), 1-(6-Chlor-3-sulfophenyl)-3-methyl-pyrazolon-(5), 1-(2,5-Dichlor-4-sulfo-phenyl)-3-methyl-pyrazolon-(5), 1-(4-Sulfo-2-methyl-phenyl)-3-methyl-pyrazolon-(5), 1-(6-Chlor-4-sulfo-2-methyl-phenyl)-3-methyl-pyrazolon-(5), 1-(4-Sulfo-phenyl)-3-methyl-pyrazolon-(5)-imid, 1-[8-Sulfo-naphthyl-(2)]-3-methyl-pyrazolon-(5)-imid, 1-[6-Sulfo-naphthyl-(2)]-3-methyl-pyrazolon-(5), 1-(4-Sulfophenyl)-pyrazolon-(5)-carbonsäure-(3), 1-(6-Chlor-4-sulfo-2-methyl-phenyl)-pyrazolon-(5)-carbonsäure-(3)-äthylester, 1-(4-Amino-phenyl)-3-methyl-pyrazolon-(5), 1-(3-Amino-phenyl)-3-methyl-pyrazolon-(5), 1-(3-Amino-5-sulfo-2-methyl-phenyl)-3-methyl-pyrazolon-(5), 1-(4-Amino-phenyl)-pyrazolon-(5)-carbonsäure-(3), 1-(3-Amino-phenyl)-pyrazolon-(5)-carbonsäure-(3), 1-[3-(3-Nitrobenzoyl-amino)-phenyl]-pyrazolon-(5)-carbonsäure-(3), 1-Carboxymethyl-3-methyl-pyrazolon-(5), 1-(2-Cyan-äthyl)-3-methyl-pyrazolon-(5), 1-(2-Chloräthyl)-3-methyl-pyrazolon-(5), 1-Methyl-, Äthyl-, -Propyl-3-methyl-pyrazolon-(5), 1-Methyl-2-hydroxy-4-methyl-5-cyan-pyridon-(6), 1-Phenyl-2-hydroxy-4-methyl-5-cyan-pyridon-(6), 2,4,6-Trihydroxy-pyrimidin, 2-Methyl-4,6-dihydroxy-pyrimidin, 2-Phenyl-4-amino-6-hydroxy-pyrimidin, 2-Phenyl-4,6-dihydroxy-pyrimidin, Acetessigsäure-anilid, -o-, -m-, -p-anisidid, -o-, -m-, -p-toluidid, Acetessigsäure-p-chlor-anilid, Acetessigsäure-(4-chlor-2-methyl-anilid), Acetessigsäure-(2,4- oder 2,5- oder 2,6-dimethyl-anilid), Acetessigsäure-(4-sulfo-anilid), Acetessigsäure-(2-methoxy-4-sulfo-5-methyl-anilid), Acetessigsäure-(2,4-, 2,5- oder 3,5-disulfo-anilid), Acetessigsäure-(2,5-disulfo-4-acetylamino-anilid), Acetessigsäure-(2- oder 3-Sulfo-4-äthoxy-anilid), Acetessigsäure-(3-sulfo-4-methyl-anilid). Naphthol-(1)-sulfonsäure-(3), -(4) und -(5), Naphthol-(2)-sulfonsäure-(4), -(5), -(6) und -(7), 6-Amino-naphthol-(1)-sulfonsäure-(3), 6-Acetylamino-naphthol-(1)-sulfonsäure-(3), 6-Benzoylamino-naphthol-(1)-sulfonsäure-(3), 7-Amino-naphthol-(1)-sulfonsäure-(3), 7-Dimethylamino-naphthol-(1)-sulfonsäure-(3), 7-Anilino-naphthol-(1)-sulfonsäure-(3), 7-Acetylamino-naphthol-(1)-sulfonsäure-(3), 7-Benzoylamino-naphthol-(1)-sulfonsäure-(3), 8-Acetylamino-naphthol-(1)-sulfonsäure-(5),

8-Acetylamino-naphthol-(2)-sulfonsäure-(5) oder -(6),
6-(4-Amino-benzoylamino)-naphthol-(1)-sulfonsäure-(3),
7-(2-Aminoäthyl-amino)-naphthol-(1)-sulfonsäure-(3),
8-Acetylamino- und Benzoylamino-naphthol-(1)-disulfonsäure-(3,5),
7-Acetylamino-naphthol-(1)-disulfonsäure-(3,6),
8-Amino-, -Acetylamino-, -Benzoylamino-,
Benzolsulfonylamino-naphthol-(1)-disulfonsäure-(3,6),
Naphthol-(1)-disulfonsäure-(3,6), -(3,7), -(3,8), -(4,8), -(5,7),
Naphthol-(2)-disulfonsäure-(3,6), -(3,7), -(4,8), -(5,7), -(6,8),
Naphthylamin-(1)-sulfonsäure-(2) bis -(8),
Naphthylamin-(2)-sulfonsäure-(1), -(5) bis -(8),
Naphthylamin-(1)-disulfonsäure-(5,7), -(4,8), -(3,8), -(4,6), -(3,7), -(3,6),
Naphthylamin-(2)-disulfonsäure-(5,7), -(4,7), -(3,7), -(3,6),
1-Amino-naphthalin, 1- und 2-Hydroxy-naphthalin, 8-Acetamino-2-hydroxy-naphthalin,
8-Methansulfonylamino-2-hydroxy-naphthalin, 1-Hydroxy-naphthalin-sulfonamid-(4),
2-Hydroxy-naphthoesäure-(3), -amid, -anilid, -chloranilid, -toluidid.
Phenol, 2-, 3- bzw. 4-Methyl-phenol, 1-Hydroxybenzol-2-carbonsäure-äthylester,
2-, 3- oder 4-Chlorphenol, 2-Methyl-3-, -5- oder -6-Chlorphenol, 3-Methyl-6-chlorphenol,
2-Äthylphenol, 2,3- oder 2,5- oder 2,6- oder 3,5-Dichlorphenol,
2,6-Diäthylphenol, 2-Cyclohexyl-phenol, 2-Methoxy-phenol oder Äthoxy-phenol,
3-Methoxy-phenol, 3-Acetylaminophenol, 4-Hydroxy-diphenyl, 4-Cyclohexyl-phenol,
4-t-Butyl-phenol, Anilin, 2- oder 3-Methyl-anilin, 2,3-, 2,5-, 2,6-Dimethyl-anilin,
N-Methyl- oder N-N-Dimethyl-anilin, N-Äthyl oder N,N-Diäthylanilin,
N-N-Dipropyl-anilin, N-(2-Chloräthyl)-N-butyl-anilin,
N-Methyl-N-(2-hydroxy-äthyl)-anilin, N-N-Bis-(2-Hydroxyäthyl)-anilin,
N-Methyl-N-(2-cyan-äthyl)-anilin, N-N-Diäthyl-2- oder -3-methyl-anilin,
N-N-(Bis-2-hydroxy-äthyl)-3-methylanilin, N-N-Diäthyl-3-acetamino-anilin,
N-N-(Bis-2-hydroxy-äthyl)-3-acetamino-anilin, N-N-Diäthyl-3-äthoxy-anilin,
N-N-(Bis-2-hydroxy-äthyl)-2-methoxy-5-methyl-anilin,
N-N-(Bis-2-acetoxy-äthyl)-3-acetamino-anilin, Phenolsulfonsäure-(2) und -(3).

d) Aminoverbindungen der Formel (XXV)

4-Amino-anisol-sulfonsäure-(2), 4-Amino-phenetol-sulfonsäure-(2),
4-Amino-anisol-sulfonsäure-(3), 4-Amino-phenetol-sulfonsäure-(3),
2-Amino-anisol-sulfonsäure-(4), 2-Amino-anisol-sulfonsäure-(4)-amid,
2-Amino-1-methoxy-benzol, 2-Amino-1-äthoxy-benzol, 4-Chlor-2-amino-anisol,
5-Chlor-4-amino-anisol, 4,5-Dichlor-2-amino-anisol, 3-Amino-1-methoxy-benzol,
4-Amino-1-methoxy-benzol, 4-Amino-1-äthoxy-benzol, 2-Chlor-4-amino-anisol.

e) Aminoverbindungen der Formel (XXIV)

Anilin, 2- und 3-Methyl-anilin, 2- und 3-Äthylanilin, 2,3-, 2,5-, 2,6-Dimethyl-anilin, 2- und 3-Methoxy-anilin, 2- und 3-Äthoxy-anilin, 2-Amino-4-methoxy-toluol, 3-Amino-4-methoxy-toluol, 3-Amino-4-äthoxy-toluol, 2,5-Dimethoxy-anilin, 3-Acetamino-anilin, 1-Amino-naphthalin-sulfonsäure-(6) und -(7), 1-Amino-2-äthoxy-naphthalin-sulfonsäure-(6) und -(7).

Geeignete Alkylierungsmittel zur Verätherung der phenolischen OH-Gruppen in den neuen Farbstoffen sind:
Alkylhalogenide, Alkylsulfonate, Halogenhydrine, Alkylencyanide und Alkylenoxide.
Im einzelnen seien genannt: Äthylchlorid, Äthylbromid, Methyljodid, Dimethyl- oder Diäthylsulfat, Benzylchlorid, Äthylenoxid, Propylenoxid, Acrylnitril, 2-Chloräthanol, 3-Chlorpropanol-(1).
Geeignete Acylierungsmittel für die freie Aminogruppe sind Säurehalogenide und Säureanhydride wie Essigsäureanhydrid, Acetylchlorid, Propionylchlorid und Benzoylchlorid.

f) Geeignete Verbindungen $R_2$—H der Formel (XVIa)

Ammoniak, Methylamin, Äthylamin, n-Propanolamin, iso-Propanolamin, n-Butylamin, iso-Butylamin, tert.-Butylamin, n-Pentylamin, n-Hexylamin, Cyclohexylamin, Dimethylamin, Diäthylamin, Di-n-propylamin, Di-iso-propylamin, Methyläthylamin, Äthanolamin, Diäthanolamin, 2-Methoxyäthylamin, 2-Äthoxyäthylamin, Sulfatoäthylamin, Aminoessigsäure, N-Methylaminoessigsäure, Taurin, N-Methyltaurin, Methylaminomethansulfonsäure, Pyrrolidin, Piperidin, 1-Methylpiperazin, Morpholin, Benzylamin, β-Phenyläthylamin, N-Methylbenzylamin, Dibenzylamin, Anilin,
1-Amino-2-, 3- oder 4-methylbenzol,
1-Amino-3,4- oder 3,5-dimethylbenzol,

1-Amino-2-, 3- oder 4-äthylbenzol,
1-Amino-2-, 3- oder 4-methoxybenzol,
1-Amino-4-äthoxybenzol,
1-Amino-2-, 3- oder 4-(2-hydroxyäthoxy)-benzol,
1-Amino-2-, 3- oder 4-(2-methoxyäthoxy)-benzol,
1-Amino-2-, 3- oder 4-chlorbenzol,
2-, 3- oder 4-Amino-phenylmethansulfonsäure,
2-Aminobenzolsulfonsäure,
3-Aminobenzolsulfonsäure,
4-Aminobenzolsulfonsäure,
5-Aminobenzol-1,3- oder 1,4-disulfonsäure,
4-Aminobenzol-1,2- oder 1,3-disulfonsäure,
2-, 3- oder 4-Aminobenzolsulfonamid,
2-, 3- oder 4-Aminobenzolsulfonsäuremethylamid,
2-, 3- oder 4-Aminobenzolsulfonsäuredimethylamid,
2-, 3- oder 4-Aminobenzolsulfonsäure-(2-hydroxyäthyl)-amid,
5-Aminobenzol-1,3-dicarbonsäure,
2 , 3- oder 4-Aminobenzoesäure,
2-, 3- oder 4-Aminobenzamid,
2-, 3- oder 4-Aminobenzoesäuremethyl- oder äthylester,
2-, 3- oder 4-Aminobenzonitril,
3-Amino-(N-phenylsulfonyl)-benzolsulfonamid,
2-, 3- oder 4-Aminophenol,
5-Amino-2-hydroxybenzolsulfonsäure,
4-Amino-2-hydroxybenzolsulfonsäure,
5-Amino-2-äthoxybenzolsulfonsäure,
1-Acetylamino-2- oder 4-aminobenzol,
1-Amino-3- oder 4-(hydroxyacetyl)-aminobenzol,
1-Amino-4-(sulfoacetyl)-aminobenzol,
3- oder 4-Aminophenylharnstoff,
N-(3-Aminophenyl)-N'-(2-hydroxyäthyl)-harnstoff,
3- oder 4-Aminophenyloxymidsäure,
1-Methylamino-3- oder 4-methylbenzol,
1-Äthylamino-4-chlorbenzol,
3-Amino-4-methoxy-benzolsulfonsäure,
1-Äthylamino-3- oder 4-methylbenzol,
N-(2-Hydroxyäthyl)-anilin,
1-(2-Hydroxyäthyl)-amino-3-methylbenzol,
3- oder 4-Methylaminobenzoesäure,
4-Methylaminobenzolsulfonsäure,
5-Amino-2-oxalamino-benzolsulfonsäure,
2-Aminonaphthalin-1-sulfonsäure,
4-Aminonaphthalin-1-sulfonsäure,
5-Aminonaphthalin-1-sulfonsäure,
6-Aminonaphthalin-1-sulfonsäure,
7-Aminonaphthalin-1-sulfonsäure,
8-Aminonaphthalin-1-sulfonsäure,
1-Aminonaphthalin-2-sulfonsäure,
4-Aminonaphthalin-2-sulfonsäure,
5-Aminonaphthalin-2-sulfonsäure,
6-Aminonaphthalin-2-sulfonsäure,
7-Aminonaphthalin-2-sulfonsäure,
7-Methylaminonaphthalin-2-sulfonsäure,
7-Butylaminonaphthalin-2-sulfonsäure,
7-Isobutylaminonaphthalin-2-sulfonsäure,
8-Aminonaphthalin-2-sulfonsäure,
4-Aminonaphthalin-1,3-disulfonsäure,
5-Aminonaphthalin-1,3-disulfonsäure,
6-Aminonaphthalin-1,3-disulfonsäure,
7-Aminonaphthalin-1,3-disulfonsäure,
8-Aminonaphthalin-1,3-disulfonsäure,
2-Aminonaphthalin-1,5-disulfonsäure,
3-Aminonaphthalin-1,5-disulfonsäure,
4-Aminonaphthalin-1,5-disulfonsäure,
4-Aminonaphthalin-1,6-disulfonsäure,

8-Aminonaphthalin-1,6-disulfonsäure,
4-Aminonaphthalin-1,7-disulfonsäure,
3-Aminonaphthalin-2,6-disulfonsäure,
4-Aminonaphthalin-2,6-disulfonsäure,
3-Aminonaphthalin-2,7-disulfonsäure,
4-Aminonaphthalin-2,7-disulfonsäure,
6-Aminonaphthalin-1,3,5-trisulfonsäure,
7-Aminonaphthalin-1,3,5-trisulfonsäure,
8-Aminonaphthalin-1,3,5-trisulfonsäure,
4-Aminonaphthalin-1,3,6-trisulfonsäure,
7-Aminonaphthalin-1,3,6-trisulfonsäure,
8-Aminonaphthalin-1,3,6-trisulfonsäure,
4-Aminonaphthalin-1,3,7-trisulfonsäure.

Die neuen Farbstoffe eignen sich besonders zum Färben und Bedrucken von natürlichen und regenerierten Cellulosefasermaterialien wie Baumwolle und Zellwolle sowie von natürlichen und synthetischen Polyamidfasermaterialien, beispielsweise solchen aus Wolle, Seide, Poly-ε-Caprolactam oder dem Polykondensat von Hexamethylendiamin und Adipinsäure. Die erhaltenen Färbungen, insbesondere solche auf Baumwolle und Zellwolle, zeichnen sich durch gute Echtheitseigenschaften aus, insbesondere Naß- und Lichtechtheiten.

Beispiel 1

26,0 g (0,1 Mol) 1-Amino-4-oxalylamino-benzolsulfonsäure werden in wäßriger Lösung bei pH = 7 mit 69 g Natrimnitrit versetzt und in üblicher Weise indirekt diazotiert, indem man die Lösung in 28 ml Salzsäure (28%) einfließen läßt. Die fertige Diazotierung gibt man zu einer wäßrigen Suspension von 33,3 g (0,105 Mol) 1,6-Diamino-naphthalin-disulfonsäure-4,8 und stumpft mit 20%iger Natriumacetatlösung bis pH = 4 ab. Nach beendeter Reaktion neutralisiert man mit Natronlauge, versetzt mit 90 ml konzentriertem Ammoniak und erhitzt auf 80—90°. Dann streut man zur Triazolierung 56 g (0,22 Mol) Kupfersulfat ein und hält die Temperatur bis zur Entfärbung der Lösung. Zur Abspaltung des Oxalylrestes und zur Ausfällung von Kupferoxid versetzt man mit Natriumhydroxid (4% des Gesamtvolumens) und kocht zwei weitere Stunden. Dann filtriert man ab und stellt das Filtrat kongosauer, wobei das Triazol der Formel (1) ausfällt. (Ausbeute ca. 0,08 Mol; 80%.)

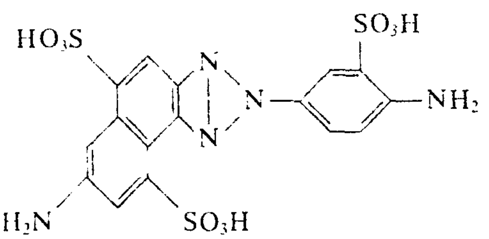

(1)

Man löst das Produkt bei pH 6,5 in 1 Ltr. Wasser, kühlt auf 0°C und tropft langsam 7,2 ml Cyanurfluorid zu. Gleichzeitig wird mit Bicarbonatlösung der pH konstant gehalten. Die Reaktion ist in wenigen Minuten beendet. Es werden 8,4 g Diäthanolamin zugegeben. Man läßt auf Raumtemperatur aufwärmen und hält 3—6 Stunden mit Sodalösung einen pH-Wert von 7,5—8. Nach beendeter zweiter Kondensation versetzt man mit 6 g Natriumnitrit und läßt in 30 ml Salzsäure (28%) einfließen. Nach einer Stunde Nachreagieren zerstört man evtl. überschüssige salpetrige Säure mit Amidosulfonsäure, streut 17,6 g (0,086 Mol) 1-Phenyl-3-carboxy-pyrazolon-(5) ein und puffert mit Natriumacetat bei pH = 5. Nach Ende der Reaktion filtriert man ab und trocknet bei 40° im Vakuum. Der erhaltene Farbstoff besitzt als freie Säure die Formel:

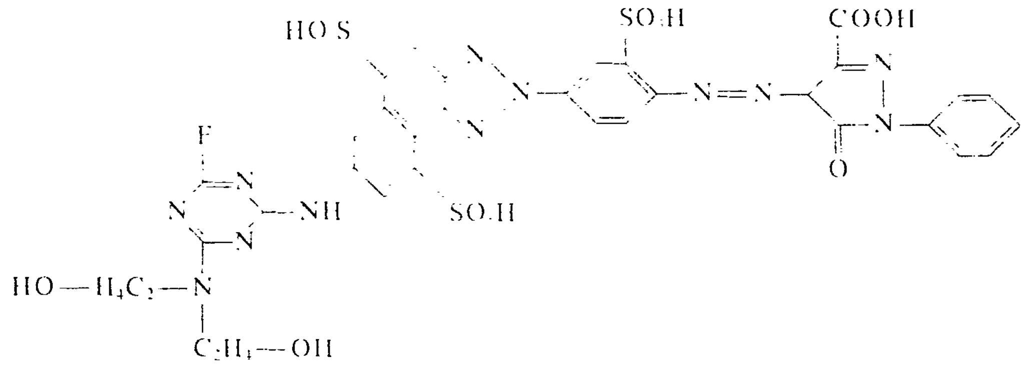

(2)

Er stellt ein orangefarbenes Pulver dar, das sich in Wasser mit gelber Farbe löst und Baumwolle in goldgelben Tönen anfärbt.

Beispiel 2

31 g 2-Naphthylamin-4,6,8-trisulfonsäure werden in 150 ml Wasser bei pH 4 gelöst, auf 0°C gekühlt und mit 7,2 ml Cyanurfluorid versetzt. Gleichzeitig wird mit Bicarbonat pH 3—3,5 gehalten. Die Umsetzung ist rasch beendet. Dazu gibt man die gleiche Menge des in Beispiel 1 beschriebenen Triazols der Formel (1), gelöst in 1 Ltr. Wasser bei pH 6 und Raumtemperatur. Man läßt das Reaktionsgemisch auf Raumtemperatur aufwärmen und hält 2—4 Stunden einen pH-Wert von 6,5—7. Nach beendeter Kondensation versetzt man mit 6 g Natriumnitrit und 30 ml Salzsäure (28%).

Nach ca. 1 Stunde zerstört man überschüssige salpetrige Säure mit Amidosulfonsäure, streut 15,0 g (0,086 Mol) 1-Phenyl-3-methyl-pyrazolon-(5) ein und puffert mit Natriumacetat bei pH 5. Nach Ende der Reaktion filtriert man ab und trocknet bei 40° C im Vakuum.

Der erhaltene Farbstoff besitzt als freie Säure die Formel:

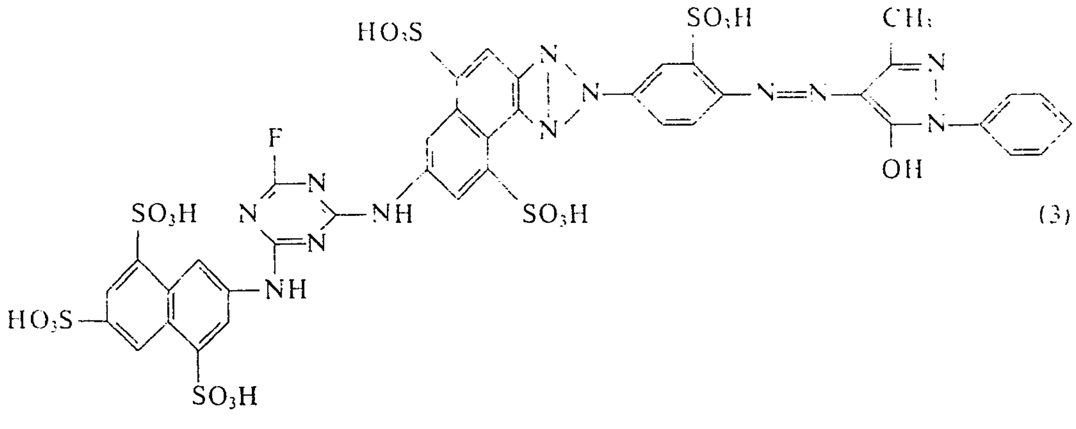

(3)

Er stellt ein orangefarbenes Pulver dar, das sich in Wasser mit gelber Farbe löst und Baumwolle in goldgelben Tönen anfärbt.

Analog den Beispielen 1 und 2 werden die in der folgenden Tabelle I angeführten Farbstoffe erhalten, wenn man Cyanurfluorid mit der Verbindung der Formel 1 und einer Verbindung $R_2-H$ in der genannten Reihenfolge behandelt, anschließend diazotiert und mit einer Kupplungskomponente umsetzt.

Die Farbstoffe färben Baumwolle in den angegebenen Farbtönen.

Tabelle I

| Diazokomponente | $R_2$ — H | Analog Beispiel | Kupplungskomponente | Farbton auf Baumwolle |
|---|---|---|---|---|
| 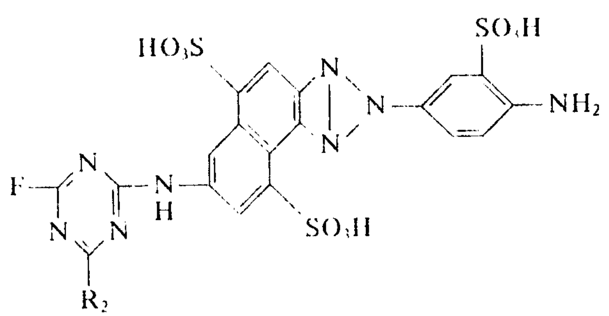 | Aminoessigsäure | 1 | 1-Phenyl-pyrazolon-(5)-carbonsäure-(3)-äthylester | gelb |
| desgl. | Taurin | 1 | 1-(2-Chlorphenyl)-3-methyl-pyrazolon-(5) | gelb |
| desgl. | N-Methyltaurin | 1 | 1-(2,5-Dichlorphenyl-3-methyl-pyrazolon-(5) | gelb |
| desgl. | Methylamin | 1 | 1-(2-Methylphenyl)-3-methyl-pyrazolon-(5) | gelb |
| desgl. | Methylaminomethan-sulfonsäure | 1 | 1,3-Dimethyl-pyrazolon-(5) | gelb |
| desgl. | Anilin | 1 | 1-Carboxymethyl-3-methyl-pyrazolon-(5) | gelb |
| desgl. | Diäthylamin | 1 | 1-(2-Carboxyäthyl)-3-methyl-pyrazolon-(5) | gelb |
| desgl. | Ammoniak | 1 | 1-(2-Carboxyäthyl)-3-carboxy-pyrazolon-(5) | gelb |
| desgl. | Dimethylamin | 1 | 1-(4-Sulfophenyl)-3-methyl-pyrazolon-(5) | gelb |
| desgl. | Morpholin | 1 | 1-(2-Methyl-4-sulfo-phenyl)-3-methyl-pyrazolon-(5) | gelb |
| desgl. | Ammoniak | 1 | 1-(4-Sulfophenyl)-pyrazolon-(5)-carbonsäure-(3) | gelb |
| desgl. | 3-Aminobenzol-sulfonsäure | 2 | 1-(2,5-Dichlor-4-sulfophenyl)-3-methyl-pyrazolon-(5) | gelb |
| desgl. | 4-Aminobenzol-sulfonsäure | 2 | 1-(2-Sulfophenyl)-3-methyl-pyrazolon-(5) | gelb |
| desgl. | 1-Aminobenzol-2,5-disulfonsäure | 2 | 1-(6-Chlor-3-sulfophenyl)-3-methyl-pyrazolon-(5) | gelb |

Tabelle I (Fortsetzung)

| Diazokomponente | $R_2$—H | Analog Beispiel | Kupplungskomponente | Farbton auf Baumwolle |
|---|---|---|---|---|
| 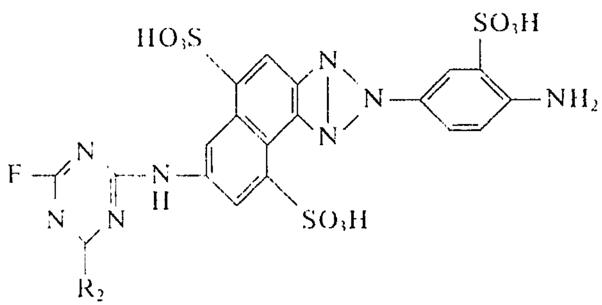 | 1-Aminobenzol-3,5-disulfonsäure | 2 | 1-(2-Chlor-4-sulfophenyl)-3-methyl-pyrazolon-(5) | gelb |
| desgl. | 2-Napthylamin-4,8-disulfonsäure | 2 | 1-(6-Chlor-4-sulfo-2-methylphenyl)-3-methyl-pyrazolon-(5) | gelb |
| desgl. | Äthylamin | 1 | 1-[6-Sulfo-naphthyl-(2)]-3-methyl-pyrazolon-(5) | gelb |
| desgl. | Diäthanolamin | 1 | 1-Phenyl-3-methy-5-aminopyrazol | gelb |
| desgl. | Äthanolamin | 1 | 1-(3-Sulfo-phenyl)-3-methyl-5-amino-pyrazol | gelb |
| desgl. | N-(2-Hydroxyäthyl)-anilin | 1 | Barbitursäure | gelb |
| desgl. | desgl. | 1 | 1-(3-Carboxy-phenyl)-3-methyl-pyrazolon-(5) | gelb |
| desgl. | desgl. | 1 | 1,4-Dimethyl-2-hydroxy-5-cyan-pyridin-(6) | gelb |
| desgl. | 2-Aminobenzoesäure | 2 | 1-Phenyl-2-hydroxy-4-methyl-5-cyan-pyridon-(6) | gelb |
| desgl. | 2-Aminobenzol-sulfonsäure | 2 | 2-Hydroxy-pyridon-(6) | gelb |
| desgl. | 4-Aminobenzoesäure | 2 | 2-Hydroxy-4-carboxy-pyridin-(6) | gelb |
| desgl. | 4-Aminophenyl-methansulfonsäure | 2 | 1-Methyl-2,4-dihydroxy-pyridon-(6)-5-carbonsäure-methylamid | gelb |
| desgl. | N-(2-Hydroxy-äthyl)-anilin | 1 | 4-Acetoacetylamino-3-methoxy-6-methyl-benzolsulfonsäure | gelb |
| desgl. | Äthanolamin | 1 | 4-Acetoacetylamino-3-methyl-6-methoxy-benzol-sulfonsäure | gelb |

Tabelle I (Fortsetzung)

| Diazokomponente | $R_2$—H | Analog Beispiel | Kupplungskomponente | Farbton auf Baumwolle |
|---|---|---|---|---|
| 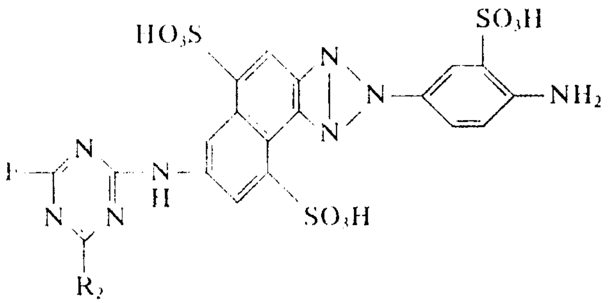 | Diäthanolamin | 1 | 3-Acetoacetylamino-4-methoxy-benzolsulfonsäure | gelb |
| desgl. | Sulfatoäthylamin | 1 | 1-Acetoacetylamino-2-methoxy-benzol | gelb |
| desgl. | 2-Methoxyäthylamin | 1 | 1-Acetoacetylamino-2-chlorbenzol | gelb |
| desgl. | N-Methylbenzylamin | | 1-Acetoacetylamino-2-methylbenzol | gelb |
| desgl. | Ammoniak | 1 | 2-Hydroxy-naphthalin-disulfonsäure-(6,8) | scharlach |
| desgl. | Anilin | 1 | 2-Hydroxy-naphthalin-disulfonsäure-(3,6) | scharlach |
| desgl. | 3-Aminobenzoesäure | 2 | 1-Hydroxy-naphthalinsulfonsäure-(4) | rot |
| desgl. | Cyclohexylamin | 1 | 8-Benzoylamino-naphthol-(1)-disulfonsäure-(3,6) | rot |
| desgl. | 2-Naphthylamin-6-sulfonsäure | 2 | 8-Acetylamino-naphthol-(1)-disulfonsäure-(3,5) | rot |
| desgl. | 2-Methylanilin | 1 | Naphtylamin-(1)-disulfonsäure-(4,8) | rot |
| desgl. | 4-Aminobenzoesäure | 2 | Naphthylamin-(1)-sulfonsäure-(4) | rot |
| desgl. | 4-Aminophenol | 1 | Naphthylamin-(2)-disulfonsäure-(3,6) | scharlach |
| desgl. | 1-Aminobenzol-2,5-disulfonsäure | 2 | 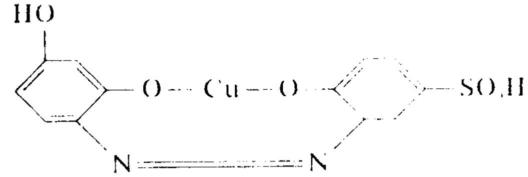 | braun |

Tabelle I (Fortsetzung)

| Diazokomponente | $R_2$ — H | Analog Beispiel | Kupplungskomponente | Farbton auf Baumwolle |
|---|---|---|---|---|
| 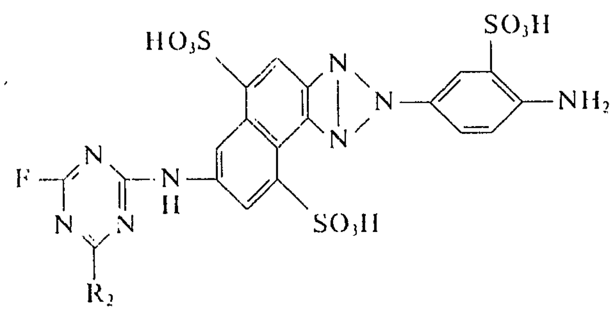 | Äthanolamin | 1 | 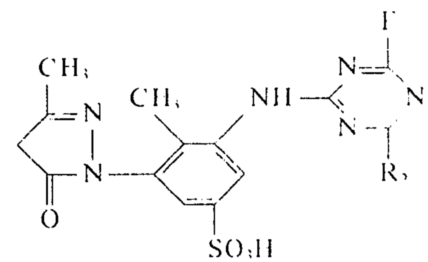 | gelb |
| desgl. | Diäthanolamin | 1 | 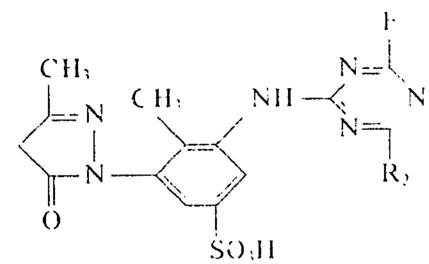 | gelb |

Wenn man die in Tabelle I angegebenen Kombinationen von $R_2-H$ und Kupplungskomponente in beliebiger Weise vertauscht, so resultieren gleichfalls wertvolle Farbstoffe, die Baumwolle in den angegebenen Tönen färben.

Diazotiert man in bekannter Weise 4-Nitroanilin anstelle von 1-Amino-4-oxalylamino-benzolsulfonsäure und verfährt wie in Beispiel 1, so erhält man die Triazolverbindung (4)

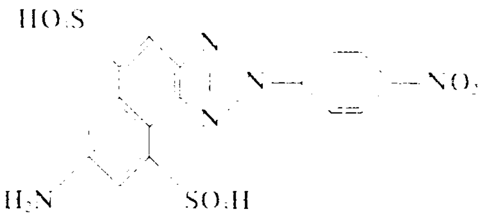
(4)

Die Reduktion der Nitrogruppe nach den üblichen Verfahren mit Eisen oder Wasserstoff/Raney-Nickel und anschließender Umsetzung der Verbindung mit 2,4,6-Trifluor-1,3,5-triazin und einer Verbindung $R_2-H$ ergibt die Diazokomponente (5)

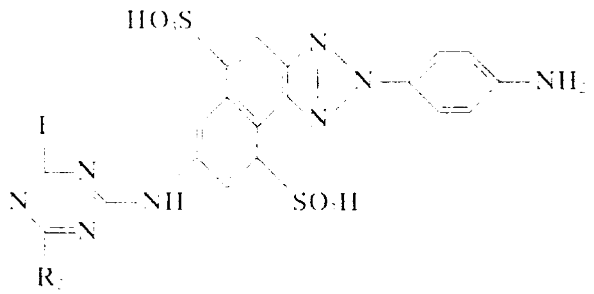
(5)

Ihre Diazotierung und Kupplung erfolgt analog den Beispielen 1 und 2.

Verwendet man die in Tabelle I angegebenen Kupplungskomponenten sowie die dort genannten Verbindungen $R_2-H$, so erhält man wertvolle Farbstoffe, die Baumwolle in den angegebenen Tönen färben.

Diazotiert man in bekannter Weise 1-Acetylamino-4-aminonaphthalin-6-sulfonsäure anstelle von 1-Amino-4-oxalylamino-benzolsulfonsäure und verfährt wie im Beispiel 1, so erhält man die Triazolverbindung (6)

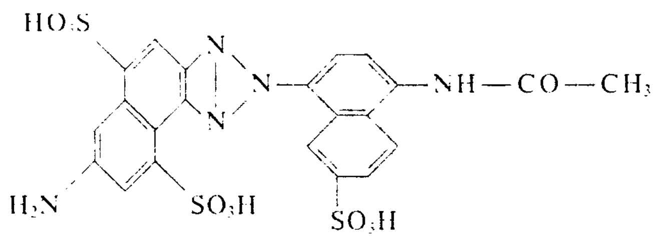
(6)

Die Verseifung der Acetylgruppen und anschließende Umsetzung mit 2,4,6-Trifluor-1,3,5-triazin und einer Verbindung $R_2-H$ ergibt die Diazokomponente (7)

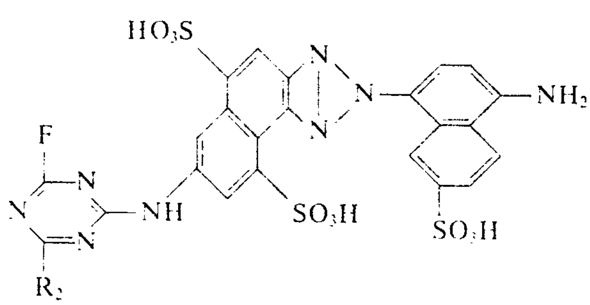
(7)

Diazotiert man in bekannter Weise 4-Nitro-1-naphthylamin-6-sulfonsäure anstelle von 1-Amino-4-oxalylamino-benzolsulfonsäure und verfährt wie im Beispiel 1, so erhält man die Triazolverbindung (8)

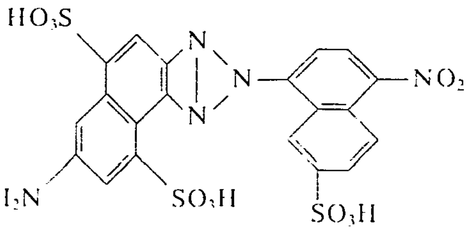

(8)

Die Reduktion der Nitrogruppe nach üblichen Verfahren und nachfolgende Umsetzung mit 2,4,6-Trifluor-1,3,5-triazin und einer Verbindung $R_2-H$ ergibt die Diazokomponente (9)

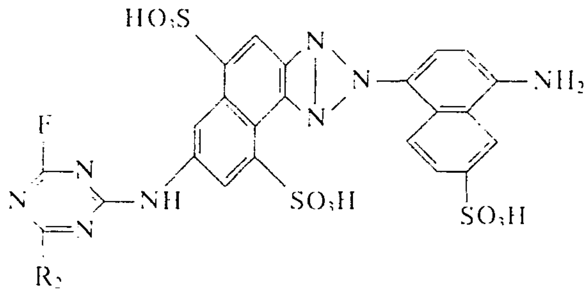

(9)

Die Diazotierung der Verbindungen (7) und (9) erfolgt analog den Beispielen 1 und 2.

Verwendet man die in Tabelle I genannten Kupplungskomponenten und die angegebenen Verbindungen $R_2-H$, so erhält man neue Farbstoffe, die Baumwolle in rotstichigeren Tönen färben, als es in Tabelle I angegeben ist.

Verfährt man wie im Beispiel 1, setzt jedoch 2,6-Diamino-toluolsulfonsäure-(4) als Kupplungskomponente ein, so erhält man das Triazol der Formel (10)

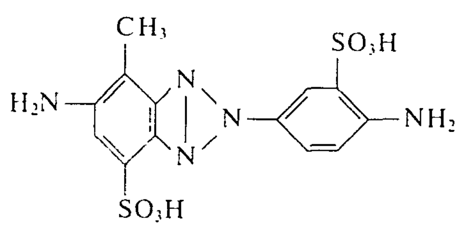

(10)

Die anschließende Umsetzung der Verbindung mit 2,4,6-Trifluor-1,3,5-triazin und einer Verbindung $R_2-H$ ergibt die Diazokomponente (11)

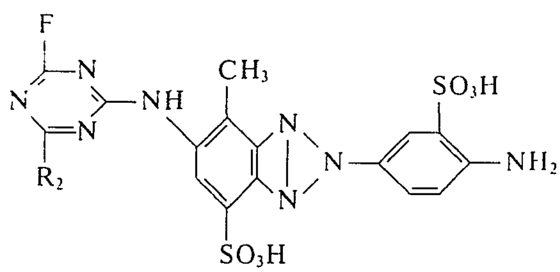

(11)

Ihre Diazotierung erfolgt analog den Beispielen 1 und 2.

Verwendet man die in Tabelle I angegebenen Kupplungskomponenten sowie die dort genannten Verbindungen $R_2-H$, so erhält man wertvolle Farbstoffe, die Baumwolle in den angegebenen Tönen färben.

Beispiel 3

**20,3 g (0,1 Mol) 1-Amino-4-methoxy-benzolsulfonsäure-(3) werden in 600 ml Eiswasser neutral gelöst und mit 6,9 g Natriumnitrit versetzt. Man gießt 28 ml Salzsäure ein, läßt 15 Minuten nachreagieren und zerstört dann evtl. überschüssige salpetrige Säure mit Amidosulfonsäure. Die erhaltene Suspension gibt man zu einer Lösung von 17,4 g 3-Amino-4-methoxy-toluol · HCl in 200 ml Wasser und puffert mit Natriumacetat bei pH=3. Nach beendeter Kupplung wird der Niederschlag isoliert. Man löst ihn**

neutral in 800 ml Wasser bei 40° und läßt die Lösung nach Zugabe von 6,9 g Natriumnitrit in 28 ml Salzsäure einfließen. Nach einer Stunde zerstört man evtl. überschüssige salpetrige Säure mit Amidosulfonsäure und streut 31,8 g 1,6-Diamino-naphthalin-disulfonsäure-(4,8) ein und puffert mit Natriumacetat bei pH =4. Nach Ende der Reaktion filtriert man den Niederschlag ab und überführt ihn in 900 ml Wasser und 90 ml Ammoniak (konz.). Man erwärmt auf 85—90° und fügt 56 g Kupfersulfat hinzu. Nach etwa 4 Stunden läßt sich kein Ausgangsprodukt mehr nachweisen. Man gibt 30 g Natriumhydroxid hinzu, kocht eine Stunde lang und filtriert von ausfallenden Kupferoxiden ab.

Anschließend stellt man mit Salzsäure auf pH 5, kühlt auf 0°C und tropft langsam 7 ml Cyanurfluorid zu. Gleichzeitig wird mit Bicarbonatlösung der pH konstant gehalten.

Nach beendeter Reaktion werden 11 g (2-Hydroxyäthyl)-anilin zugegeben. Man läßt auf Raumtemperatur aufwärmen und hält 3—6 Stunden mit Sodalösung pH 7—7,5. Nach beendeter Kondensation wird der Farbstoff mit Salz isoliert und bei 40°C im Vakuum getrocknet. Er besitzt in Form der freien Säure die Formel (12):

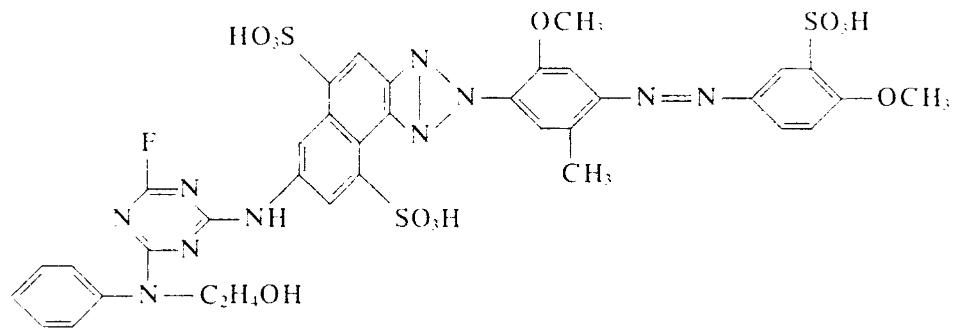

(12)

Er stellt ein gelbes Pulver dar, das sich in Wasser löst und Baumwolle in gelben Tönen färbt.

Analog des Verfahrens von Beispiel 3 werden weitere Farbstoffe erhalten unter Verwendung der Ausgangskomponente A der Mittelkomponente M und der Endkomponente E, wie aus Tabelle II zu entnehmen ist. Dabei ergeben sich z. T. sulfonsäuregruppenfreie Aminoazoverbindungen, die üblicherweise direkt weiterdiazotiert werden. Die Farbstoffe weisen die angegebenen Farbtöne auf und färben Baumwolle in diesen Tönen. Nach Kupplung mit der Endkomponente E und Triazolierung ergeben sich bei der Umsetzung mit 2,4,6-Trifluor-1,3,5-triazin und Verbindungen $R_2$—H aus Tabelle I die entsprechenden Reaktivfarbstoffe.

Tabelle II

| Ausgangskomponente A | Mittelkomponente M | Endkomponente E | Farb- ton |
|---|---|---|---|
| 1-Amino-4-methoxy-benzol-sulfonsäure-(3) | 1-Amino-3-methyl-benzol | 1.6-Diamino-naphthalin-di-sulfonsäure-(4.8) | gelb |
| 1-Amino-4-äthoxy-benzol-sulfonsäure-(3) | 3-Amino-4-methoxy-toluol | 1.6-Diamino-naphthalin-di-sulfonsäure-(4.8) | gelb |
| 1-Amino-4-methoxy-benzol-sulfonsäure-(3) | Amino-benzol | 1.6-Diamino-naphthalin-di-sulfonsäure-(4.8) | gelb |
| 1-Amino-4-methoxy-benzol-sulfonsäure-(3) | 1-Amino-2-methyl-benzol | 1.6-Diamino-naphthalin-di-sulfonsäure-(4.8) | gelb |
| 1-Amino-4-methoxy-benzol-sulfonsäure-(3) | Naphthylamin-(1)-sulfon-säure-(6) | 1.6-Diamino-naphthalin-di-sulfonsäure-(4.8) | gelb |
| 1-Amino-4-methoxy-benzol-sulfonsäure-(3) | 1-Amino-2-äthoxy-naphthalin-sulfonsäure-(6) | 1.6-Diamino-naphthalin-di-sulfonsäure-(4.8) | gelb |
| 1-Amino-4-methoxy-benzol-sulfonsäure-(2) | 1-Amino-2-methyl-benzol | 1.6-Diamino-naphthalin-di-sulfonsäure-(4.8) | gelb |
| 1-Amino-4-methoxy-benzol-sulfonsäure-(2) | Naphthylamin-(1)-sulfon-säure-(7) | 1.6-Diamino-naphthalin-di-sulfonsäure-(4.8) | gelb |
| 4-Methoxy-anilin | Naphthylamin-(1)-sulfon-säure-(7) | 1.6-Diamino-naphthalin-di-sulfonsäure-(4.8) | gelb |
| 4-Methoxy-anilin | 3-Amino-4-methoxy-toluol | 1.6-Diamino-naphthalin-di-sulfonsäure-(4.8) | gelb |
| 4-Äthoxy-anilin | 3-Methyl-anilin | 1.6-Diamino-naphthalin-di-sulfonsäure-(4.8) | gelb |
| 1-Amino-4-methoxy-benzol-sulfonsäure-(3) | Naphthylamin-(1)-sulfon-säure-(7) | 1.6-Diamino-naphthalin-di-sulfonsäure-(4.8) | gelb |
| 1-Amino-4-methoxy-benzol-sulfonsäure-(3) | Naphthylamin-(1)-sulfon-säure-(7) | 4.8-Diamino-naphthalin-di-sulfonsäure-(2.6) | gelb |
| 1-Amino-4-methoxy-benzol-sulfonsäure-(3) | Naphthylamin-(1)-sulfon-säure-(7) | 1.3-Diaminobenzol | gelb |

**Patentansprüche**

1. Gegebenenfalls metallhaltige Azofarbstoffe, die in Form der freien Säure der Formel

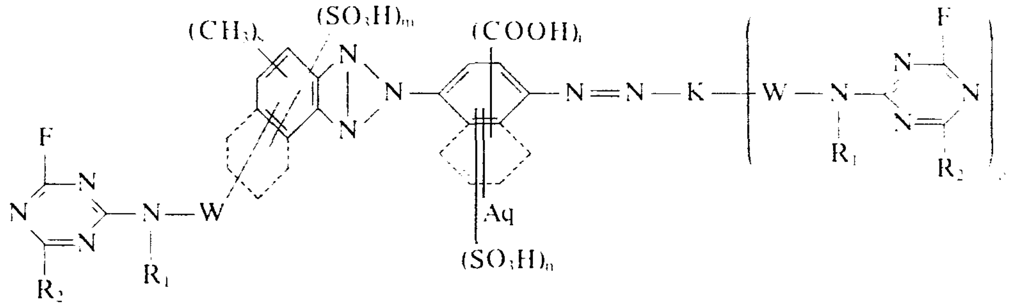

entsprechen, worin

K = Rest einer Kupplungskomponente, bevorzugt einer Kupplungskomponente der Benzol-, Naphthalin-, Pyrazolon-, Pyridon-, Pyrimidon-, Indol-, Aminopyrazol-, Aminopyridin-, Aminopyrimidin- oder Acetessigarylid-Reihe,
A = nichtionogener Substituent,
W = direkte Bindungen oder ein Brückenglied zu einem C-Atom des Benzol- oder Naphthalinkerns bzw. einem C-Atom eines aromatisch-carbocyclischen oder aromatisch-heterocyclischen Rings der Kupplungskomponente K,
$R_1$ = Wasserstoff- oder $C_1-C_4$-Alkyl,
$R_2$ = Substituent,
m = 0, 1 oder 2,
n = 0, 1 oder 2,
p = 0 oder 1,
q = 0, 1 oder 2,
r = 0 oder 1,
s = 0 oder 1 ist.

2. Farbstoffe gemäß Anspruch 1, worin

$R_2$ eine Aminogruppe

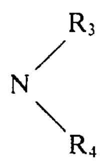

oder eine Gruppe

$$-O-R_5 \quad \text{oder} \quad -S-R_5$$

ist, worin

$R_3$ und $R_4$ unabhängig voneinander Wasserstoff, niedermolekulares Alkyl, Aryl, Aralkyl, Cycloalkyl bedeuten oder zusammen, gegebenenfalls unter Einschluß eines oder mehrerer Heteroatome, insbesondere Sauerstoff, einen Ring bilden, insbesondere einen 5- oder 6gliedrigen und

$R_5$ für niedermolekulares Alkyl, Aryl oder Aralkyl steht.

3. Gegebenenfalls metallhaltige Azofarbstoffe, die in Form der freien Säure der Formel

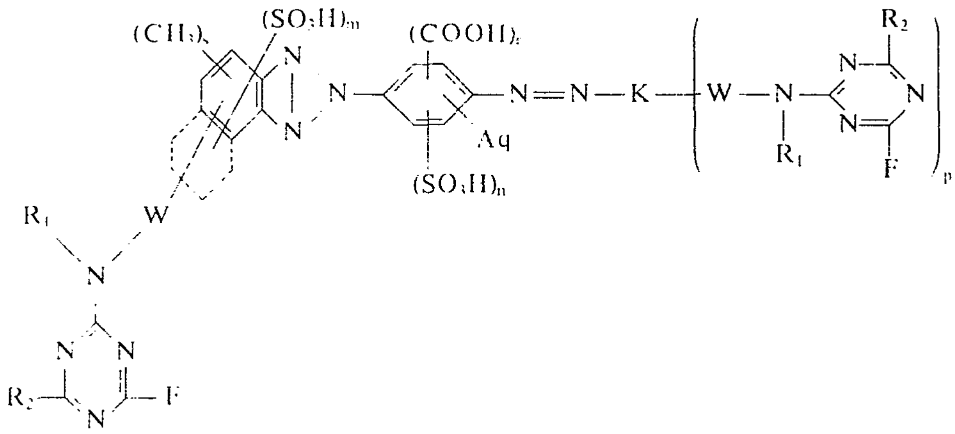

worin m, n, r, p, q, s, A, K, $R_1$, $R_2$ und W die im Anspruch 1 angegebene Bedeutung haben.

4. Gegebenenfalls metallhaltige Azofarbstoffe, die in Form der freien Säure der Formel

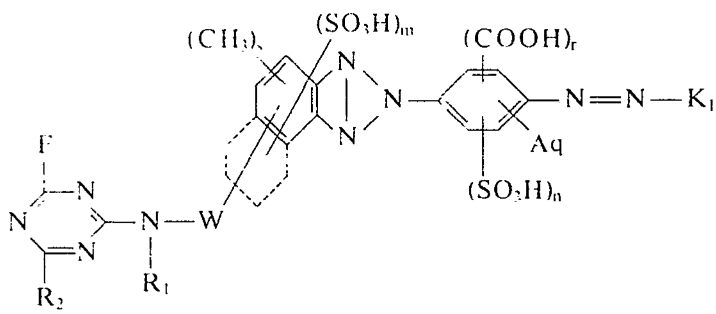

entsprechen, worin m, n, r, q, s, A, $R_1$, $R_2$ und W die in Anspruch 1 angegebene Bedeutung besitzen und

$K_1$ eine Kupplungskomponente der Benzol-, Naphthalin-, Pyrazolon-, Pyridon-, Pyrimidon-, Indol-, Aminopyrazol-, Aminopyrimidin-, Aminopyridin- oder Acetessigarylidreihe darstellt, die keinen Monofluortriazinrest enthält.

5. Gegebenenfalls metallhaltige Azofarbstoffe, die in Form der freien Säure der Formel

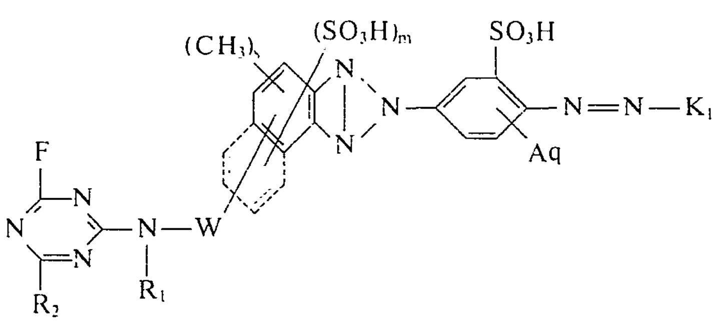

entsprechen, worin m, q, s, A, $R_1$, $R_2$ und W die im Anspruch 1 und $K_1$ die im Anspruch 4 angegebene Bedeutung haben.

6. Gegebenenfalls metallhaltige Azofarbstoffe, die in Form der freien Säure der Formel

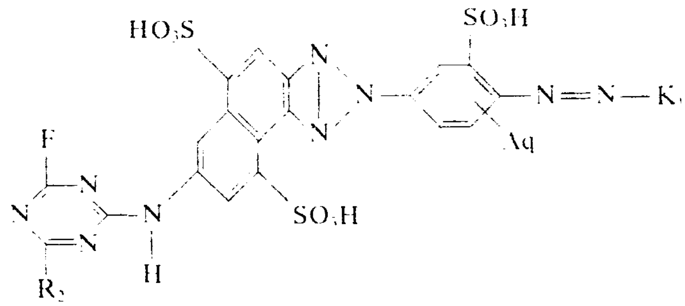

entsprechen, worin q, A und $R_2$ die im Anspruch 1 und $K_1$ die im Anspruch 4 angegebene Bedeutung haben.

7. Gegebenenfalls metallhaltige Azofarbstoffe, die in Form der freien Säure der Formel

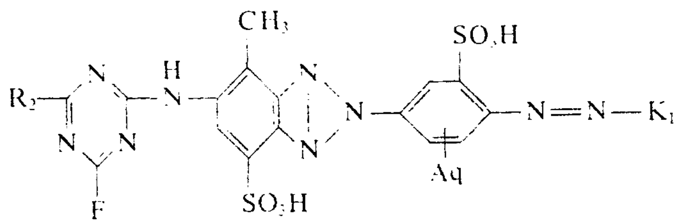

entsprechen, worin q, A und $R_2$ die im Anspruch 1 und $K_1$ die im Anspruch 4 angegebene Bedeutung haben.

8. Azofarbstoffe der Ansprüche 4 bis 7, worin

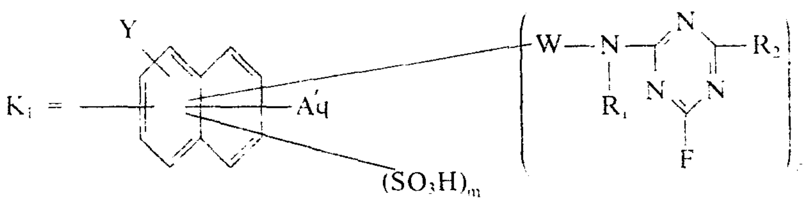

worin p, q, m, $R_1$, $R_2$ und W die im Anspruch 1 angegebene Bedeutung haben und

Y eine Hydroxy- oder Aminogruppe, und

A' einen nichtionogenen Substituenten darstellt.

9. Azofarbstoffe der Ansprüche 4 bis 7, worin

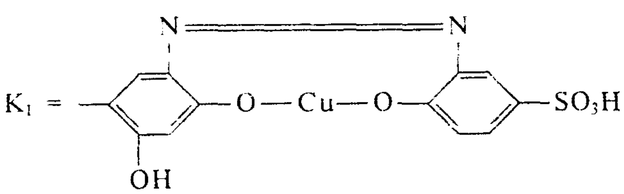

darstellt.

10. Verwendung der Farbstoffe der Ansprüche 1—9, zum Färben und Bedrucken OH- und NH-Gruppen-haltiger Fasermaterialien.

11. Mit den Farbstoffen der Ansprüche 1—9 gefärbte oder bedruckte OH- und NH-Gruppen-haltige Fasermaterialien.

**Claims**

1. Azo dyestuffs, optionally containing metals, which, in the form of the free acid, correspond to the formula

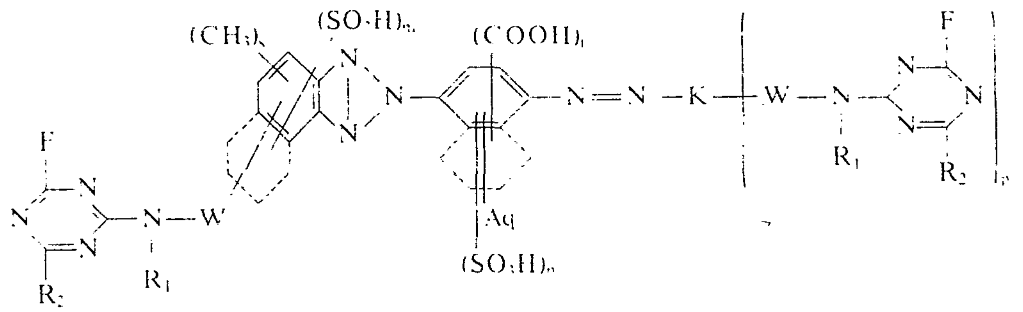

wherein

K = the radical of a coupling component, preferably of a coupling component of the benzene, naphthalene, pyrazolone, pyridone, pyrimidone, indole, aminopyrazole, aminopyridine, aminopyrimidine or acetoacetic arylide series,
A = a non-ionic substituent,
W = direct bonds or a bridge member to a C atom of the benzene or naphthalene nucleus or to a C atom of an aromatic-carbocyclic or aromatic-heterocyclic ring of the coupling component K,
$R_1$ = hydrogen- or $C_1-C_4$-alkyl,
$R_2$ = a substituent,
m = 0, 1 or 2,
n = 0, 1 or 2,
p = 0 or 1,
q = 0, 1 or 2,
r = 0 or 1 and
s = 0 or 1.

2. Dyestuffs according to Claim 1, wherein

$R_2$ is an amino group

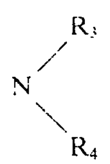

or a group

$$-O-R_5 \quad \text{or} \quad -S-R_5$$

wherein

$R_3$ and $R_4$ independently of one another denote hydrogen, low-molecular alkyl, aryl, aralkyl or cycloalkyl, or together form a ring, in particular a 5-membered or 6-membered ring, optionally with the inclusion of one or more hetero-atoms, in particular oxygen, and
$R_5$ represents low-molecular alkyl, aryl or aralkyl.

3. Azo dyestuffs, optionally containing metals, which, in the form of the free acid of the formula,

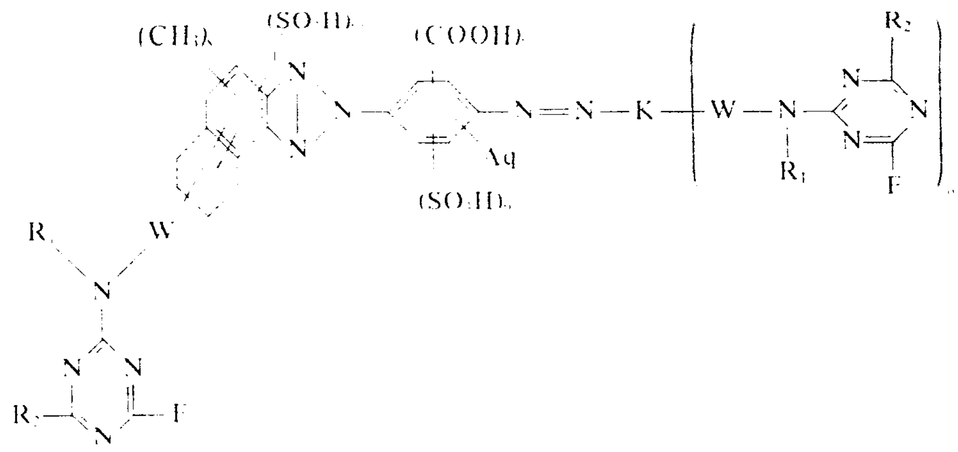

in which

m, n, r, p, q, s, A, K, $R_1$, $R_2$ and W have the meaning indicated in Claim 1.

4. Azo dyestuffs, optionally containing metals, which, in the form of the free acid, correspond to the formula

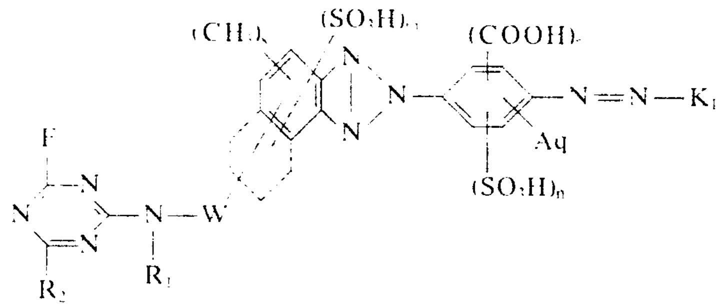

wherein

m, n, r, q, s, A, $R_1$, $R_2$ and W have the meaning indicated in Claim 1 and
$K_1$ represents a coupling component of the benzene, naphthalene, pyrazolone, pyridone, pyrimidone, indole, aminopyrazole, aminopyrimidine, aminopyridine or acetoacetic arylide series which contains no monofluorotriazine radical.

5. Azo dyestuffs, optionally containing metals, which, in the form of the free acid, correspond to the formula

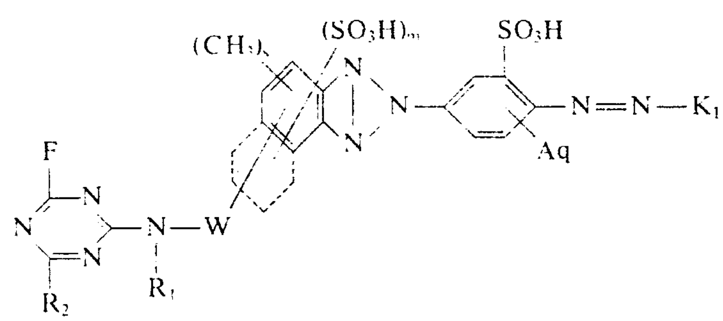

wherein

m, q, s, A, $R_1$, $R_2$ and W have the meaning indicated in Claim 1, and
$K_1$ has the meaning indicated in Claim 4.

6. Azo dyestuffs, optionally containing metals, which, in the form of the free acid, correspond to the formula

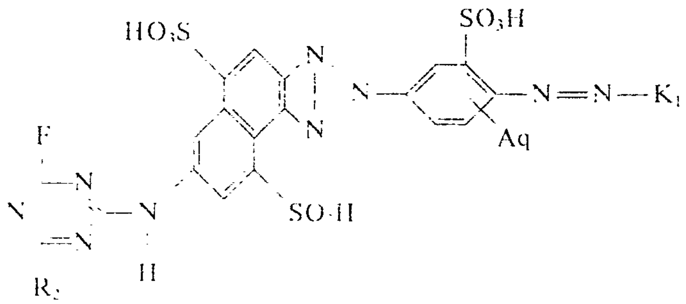

wherein

q, A and $R_2$ have the meaning indicated in Claim 1 and
$K_1$ has the meaning indicated in Claim 4.

7. Azo dyestuffs, optionally containing metals, which, in the form of the free acid, correspond to the formula

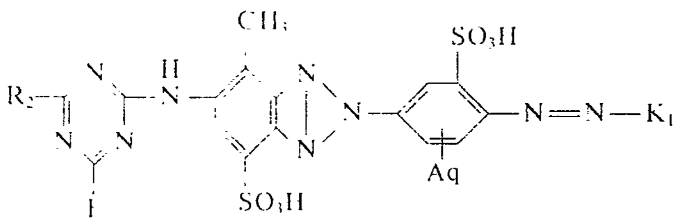

wherein

q, A and $R_2$ have the meaning indicated in Claim 1 and
$K_1$ has the meaning indicated in Claim 4.

8. Azo dyestuffs of Claims 4—7,

$K_1$ = 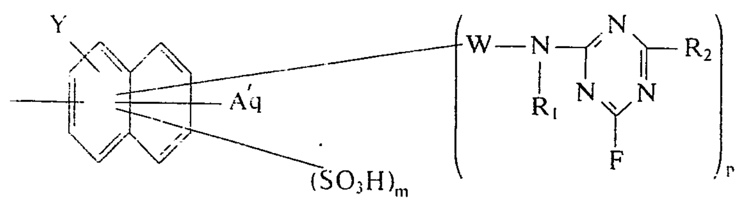

wherein

p, q, m, $R_1$, $R_2$ and W have the meaning indicated in Claim 1,
Y represents a hydroxyl or amino group, and A' represents a non-ionic substituent.

9. Azo dyestuffs of Claims 4—7,

wherein

$K_1$ represents

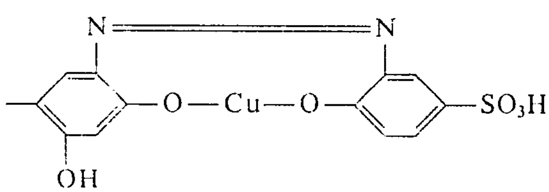

10. Use of the dyestuffs of Claims 1—9 for dyeing and printing fibre materials containing OH groups or NH groups.

11. Fibre materials containing OH groups or NH groups, dyed or printed with the dyestuffs of Claims 1—9.

## Revendications

1. Colorants azoïques contenant éventuellement des métaux qui correspondent, sous forme d'acide libre, à la formule

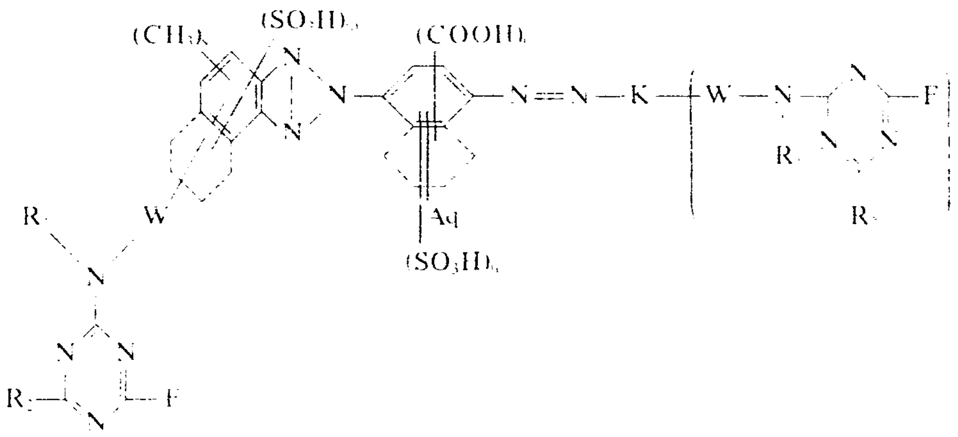

dans laquelle

K représente le reste d'un composant de copulation, de préférence un composant de copulation de la série du benzène, du naphtalène, de la pyrazolone, de la pyridone, de la pyrimidone, de l'indole, de l'aminopyrazole, de l'aminopyridine, de l'aminopyrimidine ou des acétylacétarylides,
A représente un substituant non ionogène,
W représente des liaisons directes ou un chaînon de pontage avec un atome C du noyau benzénique ou naphtalénique ou un atome C d'un noyau aromatico-carbocyclique ou aromatico-hétérocyclique du composant de copulation K,
$R_1$ représente l'hydrogène ou un alkyle en $C_1-C_4$,
$R_2$ représente un substituant,
m = 0, 1 ou 2,
n = 0, 1 ou 2,
p = 0 ou 1
q = 0, 1 ou 2,
r = 0 ou 1,
s = 0 ou 1.

2. Colorants selon la revendication 1, dans lesquels

$R_2$ représente un groupe amino 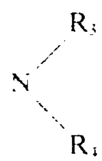 ou un groupe $—O—R_5$ ou $—S—R_5$

dans lesquels

$R_3$ et $R_4$ représentent indépendamment l'un de l'autre l'hydrogène, un alkyle de bas poids moléculaire, aryle, arylalkyle ou cycloalkyle, ou bien pris ensemble, éventuellement avec un ou plusieurs hétéroatomes, forment un noyau, en particulier a 5 ou 6 chaînons, et
$R_5$ représente un alkyle de bas poids moléculaire, aryle ou arylalkyle.

3. Colorants azoïques contenant éventuellement des métaux qui, sous la forme acide libre, répondent à la formule

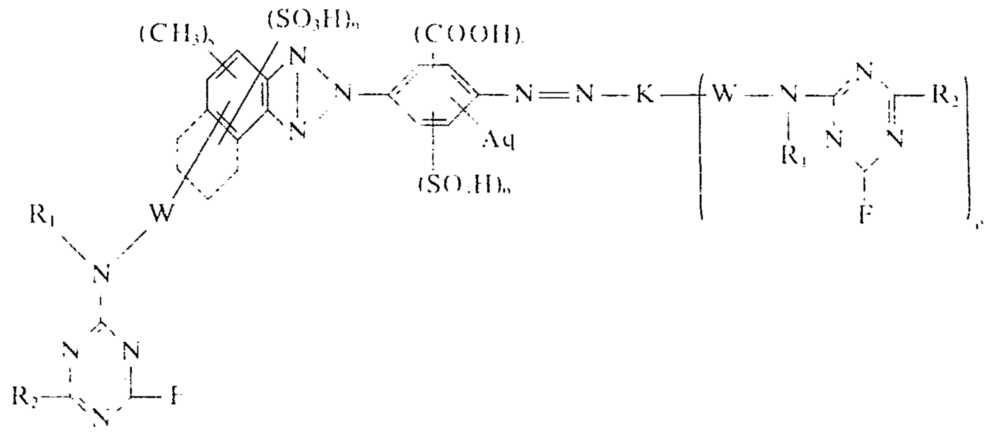

dans laquelle

m, n, r, p, q, s, A, K, $R_1$, $R_2$ et W ont la signification indiquée dans la revendication 1.

4. Colorants azoïques contenant éventuellement des métaux qui, sous la forme acide libre, répondent à la formule

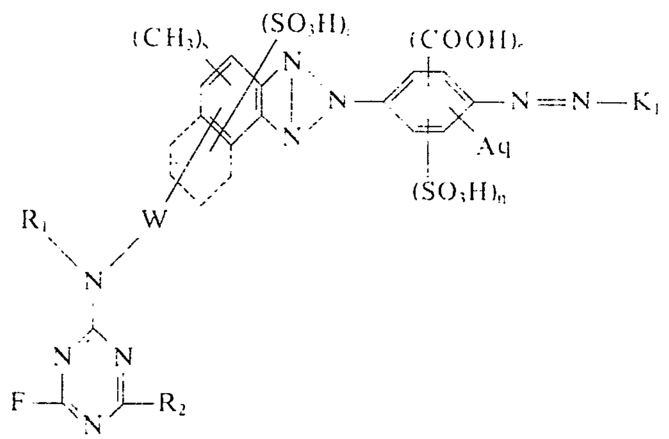

dans laquelle

m, n, r, q, s, A, $R_1$, $R_2$ et W possèdent la signification indiquée dans la revendication 1 et
$K_1$ représente un composant de copulation de la série du benzène, du naphtalène, de la pyrazolone, de la pyridone, de la pyrimidone, de l'indole, de l'aminopyrazole, de l'aminopyrimidine, d l'aminopyridine ou des acétylacétarylides, qui ne contient pas de reste monofluorotriazine.

5. Colorants azoïques contenant éventuellement des métaux qui, sous la forme acide libre, correspondent à la formule

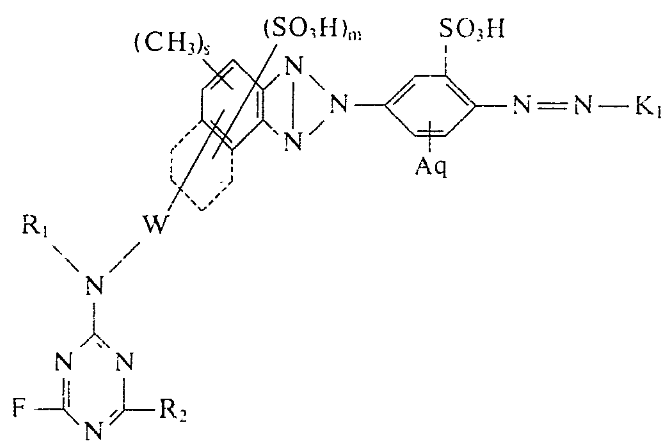

dans laquelle

m, q, s, A, $R_1$, $R_2$ et W ont la signification indiquée dans la revendication 1 et $K_1$ a la signification indiquée dans la revendication 4.

6. Colorants azoïques contenant éventuellement des métaux qui, sous la forme acide libre, correspondent à la formule

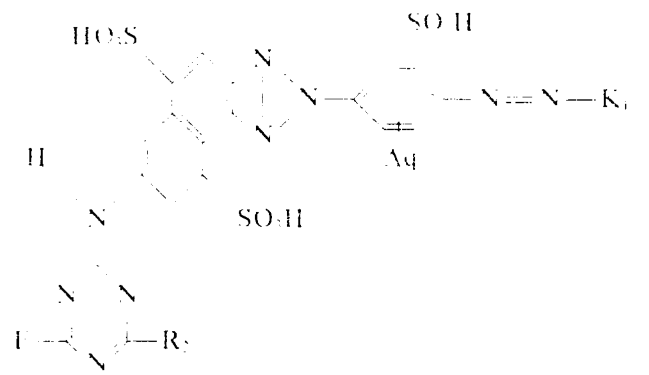

(VI)

dans laquelle

q, A et $R_2$ ont la signification indiquée dans la revendication 1 et $K_1$ la signification indiquée dans la revendication 4.

7. Colorants azoïques contenant éventuellement des métaux qui, sous la forme acide libre, correspondent à la formule

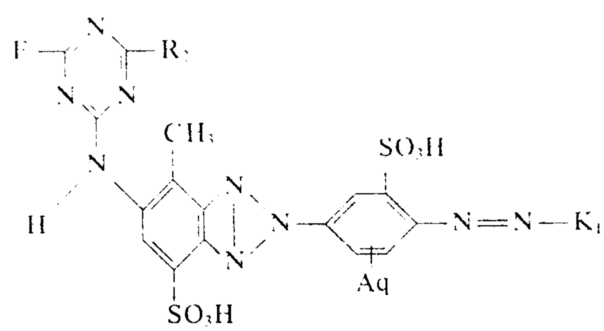

dans laquelle

q, A et $R_2$ ont la signification indiquée dans la revendication 1 et $K_1$ la signification indiquée dans la revendication 4.

8. Colorants azoïques des revendications 4—7 dans lesquels

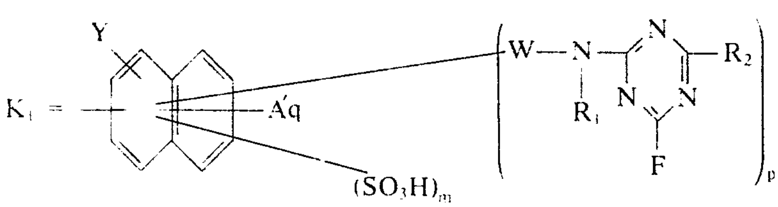

dans laquelle

p, q, m, $R_1$, $R_2$ et W ont la signification indiquée dans la revendication 1 et
Y représente un groupe hydroxy ou amino et
A′ représente un substituant non ionogène.

9. Colorants azoïques des revendications 4—7 dans lesquels

$K_1$ = 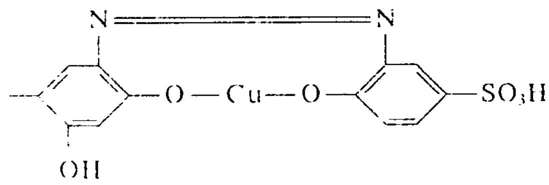

10. Utilisation des colorants selon les revendications 1 là 9 pour la teinture et l'impression de matériaux fibreux contenant des groupes OH et NH.

11. Matériaux fibreux contenant des groupes OH et NH, colorés ou teints avec les colorants des revendications 1—9.